**Europäisches Patentamt**

**European Patent Office**

**Office européen des brevets**

(19)

(11) Publication number : **0 292 512 B1**

## EUROPEAN PATENT SPECIFICATION

(12)

(45) Date of publication of patent specification :
15.07.92 Bulletin 92/29

(51) Int. Cl.⁵ : **H02M 5/458, H02M 7/217, H02M 7/797**

(21) Application number : **87906726.2**

(22) Date of filing : **25.09.87**

(86) International application number :
**PCT/US87/02489**

(87) International publication number :
**WO 88/02573 07.04.88 Gazette 88/08**

(54) STATIC POWER CONVERSION METHOD AND APPARATUS.

(30) Priority : **25.09.86 US 912080**

(43) Date of publication of application :
**30.11.88 Bulletin 88/48**

(45) Publication of the grant of the patent :
**15.07.92 Bulletin 92/29**

(84) Designated Contracting States :
**AT BE CH DE FR GB IT LI LU NL SE**

(56) References cited :
**DE-A- 2 541 687**
**JP-A- 5 759 478**
**US-A- 463 211**
**US-A- 3 213 287**
**US-A- 3 222 587**
**US-A- 3 430 123**
**US-A- 3 940 669**
**US-A- 4 086 622**

(56) References cited :
**US-A- 4 138 715**
**CONFERENCE RECORD OF THE 1986 IEEE INDUSTRY APPLICATIONS SOCIETY ANNUAL MEETING, 28th September - 3rd October 1986, Denver, Colorado, part I, pages 648-656, IEEE, New York, US; D.M. DIVAN: "The resonant DC link converter - a new concept in static power-conversion"**

(73) Proprietor : **WISCONSIN ALUMNI RESEARCH FOUNDATION**
**Post Office Box 7365 614 North Walnut**
**Madison, WI 53707 (US)**

(72) Inventor : **DIVAN, Deepakraj, M.**
**5114 Buffalo Trial**
**Madison, WI 53705 (US)**

(74) Representative : **Williams, Trevor John et al**
**J.A. KEMP & CO. 14 South Square Gray's Inn**
**London WC1R 5EU (GB)**

EP 0 292 512 B1

## Description

This invention pertains generally to the field of static power converters and systems for the control of static power converters.

BACKGROUND OF THE INVENTION

The development and commercial availability of gate turn-off devices capable of handling relatively large power levels has resulted in a significant change in power conversion technology. For example, thyristors are now rarely used in force-commutated systems. To a large extent, the thyristor current source inverter has been replaced by GTO and transistor voltage source inverters at power ratings up to 1 megawatt (MW). The voltage source inverter is particularly attractive because of its extremely simple power structure and the need for only six uni-directional gate turn-off devices (for three-phase load power). The anti-parallel diodes required across each of the gate turn-off devices are typically provided by the manufacturer in the same device package for minimum lead inductance and ease of assembly. The control strategy for such voltage source inverters is reasonably simple and provides a fully regenerative interface between the DC source and the AC load.

Despite the clear advantages of the voltage source inverter structure, the inherent characteristics of available gate turn-off devices imposes several limitations on the performance of the inverters. For example, the high switching losses encountered in such inverters mandates the use of low switching frequencies, resulting in low amplifier bandwidth and poor load current waveform fidelity (unwanted harmonics). The rapid change of voltage with time on the output of the inverter generates interference due to capacitive coupling. The parallel diode reverse recovery and snubber interactions cause high device stresses under regeneration conditions. In turn, the need to withstand the high device stresses reduces reliability and requires that the devices be overspecified. The relatively low switching frequencies required has also been observed to cause an acoustic noise problem because the switching frequency harmonics in the output power generate noise at audible frequencies in the switching system and motor. And, in general, present inverter designs have poor regeneration capability into the AC supply line, poor AC input line harmonics, requiring large DC link and AC side filters, and have poor fault recovery characteristics.

Ideally, a power converter should have essentially zero switching losses, a switching frequency greater than about 18 kHz (above the audible range), small reactive components and the ability to transfer power bi-directionally. The system should also be insensitive to second order parameters such as diode recovery times, device turn-off characteristics and parasitic reactive elements. It is clear that present voltage source inverter designs do not achieve such optimum converter characteristics.

It is apparent that a substantial increase in inverter switching frequency would be desirable to minimize the lower order harmonics in pulse width modulated inverters. Higher switching frequencies have the accompanying advantages of higher current regulator bandwidth, smaller reactive component size and, for frequencies above 18 kHz, acoustic noise which is not perceptible to humans. Increases in pulse width modulated inverter switching frequencies achieved in the last several years (from about 500 Hz to 2 KHz for supplies rated from 1 to 25 kW) have generally been accomplished because of improvements in the speed and ratings of the newer devices. An alternative approach is to modify the switching circuit structure to make best use of the characteristics of available devices.

One well-established approach is the use of snubber networks which protect the devices by diverting switching losses away from the device itself. The most modular snubber configuration is a simple circuit structure in which a small inductor provides turn-on protection while a shunt diode and capacitor across the device provide a polarized turn-off snubber. A resistor connected across the inductor and diode provides a dissipative snubber discharge path. Although the advantages of the use of snubbers in transistor inverters are well-known, packaging problems and the cost of the additional snubber components has made their commercial use infrequent. For GTO inverters, on the other hand, the snubber is absolutely essential for device protection and is often crucial for reliable and successful inverter design. While snubbers adequately alleviate device switching losses, the total switching losses do not change appreciably when losses in the snubber are considered, and can actually increase from the losses experienced in circuits unprotected by snubbers under certain operating conditions. Thus, the increases in inverter switching frequency which have been obtained with the use of snubbers carry a serious penalty in terms of overall system efficiency.

Another alternative is a resonant mode converter employing a high frequency resonant circuit in the power transfer path. Two distinct categories of resonant inverters can be identified. The first category, of which induction heating inverters and DC/DC converters are examples, accomplish control of the power transfer through a modulation of the inverter switching frequency. For these circuits, the frequency sensitive impedance of the resonant tank is the key to obtaining a variable output. While it is also possible to synthesize low frequency AC waveforms using such frequency modulation principles, complexity of control, the large number of switching devices required, and the relatively large size of the resonant components limits the applications for such circuit structures.

The second type of resonant converter, sometimes referred to as a high frequency link converter, typically uses naturally commutated converters and cycloconverters with a high frequency AC link formed of a resonant LC tank circuit. The high frequency link converters are capable of AC/AC or DC/AC conversion with bi-directional power flow and adjustability of the power factor presented to the AC supply. In contrast to the frequency modulation scheme of the first category of converters, the link frequency is not particularly important and output AC waveform synthesis is done through modulation of the output stage. For naturally commutated switching devices, phase angle control is ordinarily used. The high frequency link converter is generally capable of switching at frequencies greater than 18 kHz using available devices at the multi-kilowatt power level. However, the technology has not been economically competitive and has not been widely used industrially for variable speed drive type applications. This may be attributed to several factors. In particular, the large number of bi-directional high speed, high power switches required must be realized using available uni-directional devices. For example, as many as thirty-six thyristors may be required in addition to an excitation inverter in some configurations. The recovery characteristics of the devices used often necessitate the addition of snubber networks, lowering the efficiency of the overall system. In addition, the LC resonant circuit handles the full load power which is transferred from input to output and has large circulating currents, e.g., often up to six times the load current. Consequently, even though the total energy stored in the system is small, the volt-ampere rating of the resonant elements is quite high. Furthermore, control of such systems is extremely complex given the simultaneous tasks of input and output control, high frequency bus regulation, and thyristor commutation for circuits employing naturally commutated thyristors.

US-A-4 138 715 forms the basis for the precharacterising parts of claims 15 and 25 and discloses a DC to DC converter which employs resonant switching to turn switching power devices on and off at zero current.

In order to obtain greater efficiency, the present invention as defined in claim 1 and 15 provides apparatus respectively giving AC/DC inversion or DC/AC restification with the resonant circuit producing voltage oscillation such that swithing occurs as the voltage passes zero.

Claim 25 defines the method of the invention such as to cause the voltage across the capacitor to be driven to zero at the end of a resonant cycle with switching taking place at such zero voltage.

The static power converter of the present invention combines the advantage of DC link systems, which allow the use of a minimum number of devices, and resonant converters which operate at high switching frequencies. These combined advantages are achieved by providing a switching environment which produces essentially zero switching losses so that the converter switching frequency is restricted only by device turn-on, storage and turn-off times. Preferably, zero switching losses are obtained by holding the DC bus voltage at substantially zero volts for the duration of the switching transient by making the DC bus oscillatory, so that the voltage across the bus remains substantially at zero for a sufficient period of time to allow the loss-less switching to take place. Power may be converted from a direct current supply to a desired AC frequency with the switching off all devices taking place at relatively high frequencies, preferably about 18 kHz to be beyond the human audible range and generally substantially higher than the output power frequency. The DC supply may itself be a converter connected to AC mains and having switching devices for rectifying the AC power to DC power at the DC bus, with switching of the devices in the DC supply converter also preferably taking place at the times of zero voltage across the DC bus, allowing bi-directional transfer of power. In this manner, the losses incurred in the switching devices may be absolutely minimised and the requirements for snubber networks about the switching devices may be simplified and, in many cases, the need for snubbers may be eliminated.

Various control schemes may be utilized for controlling the inverter delivering power to the AC load, including integral pulse width modulation with the switching signals from the controller being synchronized to coincide with the points of the zero voltage on the DC bus. The power converter of the present invention thus requires only the addition of a small inductor and capacitor to the components required for a conventional voltage source inverter circuit, and is capable of switching almost an order of magnitude faster than state of the art voltage source inverters at significantly improved efficiencies using the same families of devices. It is especially suitable for high power application using GTOs or other gate turn-off devices.

The converter structure as later described in detail has several operating characteristics which are of particular usefulness in an industrial environment. The converter has a dead beat response which allows excellent control of transient stresses and minimizes the impact of most load or supply side faults. The circuit has a simple power structure with low losses and requires no snubbers. System reliability is improved over conventional voltage source inverters because the devices have no switching losses. The high switching speed makes it possible to provide very high bandwidth current regulators, and the acoustic noise associated with variable speed drives, often a problem in industrial and commercial installations, is also dramatically reduced. The resonant DC link power converter can also be readily adapted to multi-quadrant, three-phase AC to three-phase AC power conversion with low harmonic currents on both the input and output sides and with substantially unity power factor.

To minimize the voltage stresses that are applied to the switching devices in the conversion apparatus, it is preferred that a clamping means be connected to the DC bus of the conversion apparatus to limit the maximum voltage across the bus to a lower level which imposes less severe voltage stresses. For example, it is possible by implementing active clamping means to reduce the voltage stresses on the switching devices from approximately 2.5 times the DC source voltage to 1.2 to 1.4 times the supply voltage and between 2.0 and 2.5 by implementing passive clamping means. The active clamping means includes an active control device, such as a bipolar transistor, which is controlled to switch at the proper times to insure that sufficient energy is returned to the resonant tank circuit to allow the tank to continue to oscillate stably. The active clamping means can be implemented utilizing a voltage source, or a charged capacitor acting as the voltage source, and a parallel connected diode and switch (e.g., a transistor), with the voltage source and the diode-switch combination connected across the inductor in the resonant tank. Alternatively, the voltage source, or charged capacitor, can be connected in series with a resonant tank inductor which is connected across the DC bus, and with the diode-switch combination connected between the supply voltage source and the inductor in a bucking output active clamp configuration.

Further objects, features, and advantages of the invention will be apparent from the following detailed description when taken in conjunction with the accompanying drawings.

BRIEF DESCRIPTION OF THE DRAWINGS

In the drawings:

Fig. 1 is a schematic circuit diagram of a current fed resonant converter using an H-bridge with the DC bus structured to form a resonant DC link.

Fig. 2 is a DC to three-phase AC resonant DC link inverter using an H-bridge to drive oscillations in the resonant circuit.

Fig. 3 are graphs illustrating the voltage waveforms in the circuit of Fig. 2 wherein a low frequency AC waveform is synthesized from integral pulses of the resonant DC link using integral pulse-width modulation.

Fig. 4 is a schematic circuit diagram illustrating the formation of a DC resonant link utilizing a single transistor.

Fig. 5 is a schematic circuit diagram for a DC to three-phase inverter using the DC resonant link of Fig. 4.

Fig. 6 is a schematic circuit diagram of a DC to three-phase inverter in which excitation of the resonant circuit is obtained utilizing the switching transistors of the inverter.

Fig. 7 is a three-phase AC to three-phase AC power converter utilizing a DC resonant link.

Fig. 8 are graphs illustrating currents and voltages in a DC resonant link circuit equivalent to that of Fig. 4.

Fig. 9 is a block diagram of a controller for controlling the oscillation of the resonant circuit and the modulation switching of the switching devices in the inverter for a circuit of the type shown in Fig. 5.

Fig. 10 is a block diagram of a controller for controlling the oscillation of the resonant circuit and the modulation switching of the switching devices in the inverter for a circuit of the type shown in Fig. 6.

Fig. 11 is a block diagram of an integral pulse width modulator which may be utilized in the controller of Fig. 9.

Fig. 12 is a schematic circuit diagram of a resonant link inverter having an active clamp.

Fig. 13 are illustrative graphs showing the DC link voltage and the line to line voltage waveforms for the circuit of Fig. 12.

Fig. 14 is a schematic circuit diagram of a 3-phase output actively clamped DC resonant link inverter having a boost clamp implementation.

Fig. 15 is a schematic circuit diagram of a 3-phase output actively clamped DC resonant link inverter having a buck output implementation.

Fig. 16 is an equivalent circuit diagram of the circuit of Fig. 12 for analysis of the active clamp operation.

Fig. 17 are graphs showing the DC link voltage and the inductor current in the circuit of Fig. 16 illustrating the modes of operation of this circuit.

Fig. 18 is a graph illustrating the variation of link switching frequency with the clamping voltage ratio, K, for lossless LC components.

Fig. 19 is a graph showing the linearized DC link voltage waveform for the circuit of Fig. 16.

Fig. 20 are graphs of simulations of the DC link voltage, the clamping capacitor voltage, the inductor current and the DC link current for the inverter circuit of Fig. 12.

Fig. 21 is a schematic block diagram of a controller for the active clamped resonant link converter.

Fig. 22 is a schematic circuit diagram of another embodiment of a resonant link inverter having an active clamp.

Fig. 23 is a schematic circuit diagram of a resonant link inverter having a passive clamp.

DESCRIPTION OF THE PREFERRED EMBODIMENT

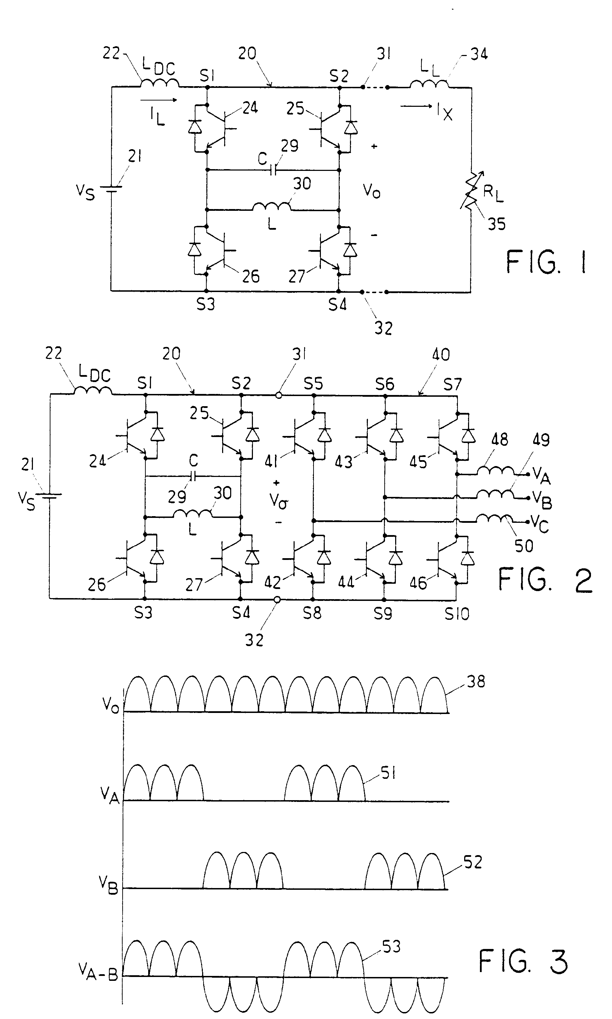

To illustrate the principles of the present invention, a current fed resonant circuit 20 is shown in Fig. 1 which can be controlled to function as a DC resonant link. The circuit 20 includes a direct current (DC) voltage source power supply 21, a series DC link inductor 22 (of inductance $L_{DC}$), and an H-bridge excitation circuit composed of switching transistors 24, 25, 26 and 27, each having associated anti-parallel diodes, with a parallel connected capacitor 29 and inductor 30 across the bridge. The transistors 24, 25, 26 and 27 can be provided with appropriate gating signals to excite the resonant circuit composed of the capacitor 29 and inductor 30 at or below its resonant frequency to produce a substantially sinusoidal oscillating voltage across the parallel combination of the capacitor 29 and inductor 30, resulting in a DC voltage with a superimposed oscillating voltage between DC bus output terminals 31 and 32. For purposes of illustration, the output terminals 31 and 32 may be connected to a load illustratively consisting of an inductance 34 (of inductance $L_L$) and resistance 35 (of resistance $R_L$).

With the load inductance 34 and resistance 35 connected to the terminals 31 and 32, an average current level will exist in the DC link inductor 22 corresponding to the current in the resistor 35 and any current passing through parasitic resistances associated with the H-bridge and the resonant circuit. To maintain the oscillations, the transistor switches 24-27 are switched at points in time at which there is substantially zero voltage across them. This results in a zero switching loss condition, which holds even for switching frequencies below the natural resonant frequency of the resonant circuit. The DC bus voltage $V_0$ is a rectified sinusoid which goes through two zero crossings per cycle of the switching frequency, as illustrated by the graph 38 of Fig. 3. When DC power is delivered to the load inductor 34 and load resistor 35, the resonant circuit damping remains independent of the power delivered, as long as the load inductor 34 is much larger than the DC link inductor 22, and which in turn is larger than the resonant circuit inductor 30. Consequently, even when power is delivered to the load, the resonant circuit composed of the inductor 29 and the capacitor 30 continues to oscillate and does not transfer any of the power which is delivered to the load resistor 35 in the steady state.

Of particular significance is the recognition that because the output voltage $V_0$ at the terminals of the DC bus reaches zero volts, then additional switching devices connected across the bus can also be operated with zero switching losses if they are switched at the zero voltage crossings of the bus. An example is the DC to three-phase converter circuit shown in Fig. 2 in which the DC resonant link 20 is connected to a three-phase inverter 40 composed of paired switching devices (e.g., bipolar transistors with antiparallel diodes) 41 and 42, 43 and 44, and 45 and 46, each connected across the DC bus terminals 31 and 32. AC terminal lines 48, 49 and 50 with associated inductive load impedances are each connected between a respective one of the pairs of switching transistors in the inverter 40. Such a circuit structure allows a low frequency AC waveform to be readily synthesized using integral cycles of the resonant DC link voltage waveform 38, in the manner illustrated in Fig. 3. An integral number of cycles of the rectified DC voltage 38 at the bus terminals 31 and 32 are supplied in sequential fashion to the terminals 48 and 49, yielding the output voltages $V_a$ and $V_b$, shown by the waveform graphs 51 and 52, respectively, and the difference of the voltages at the two terminals may be obtained to yield the waveform 53 composed of $V_a - V_b$.

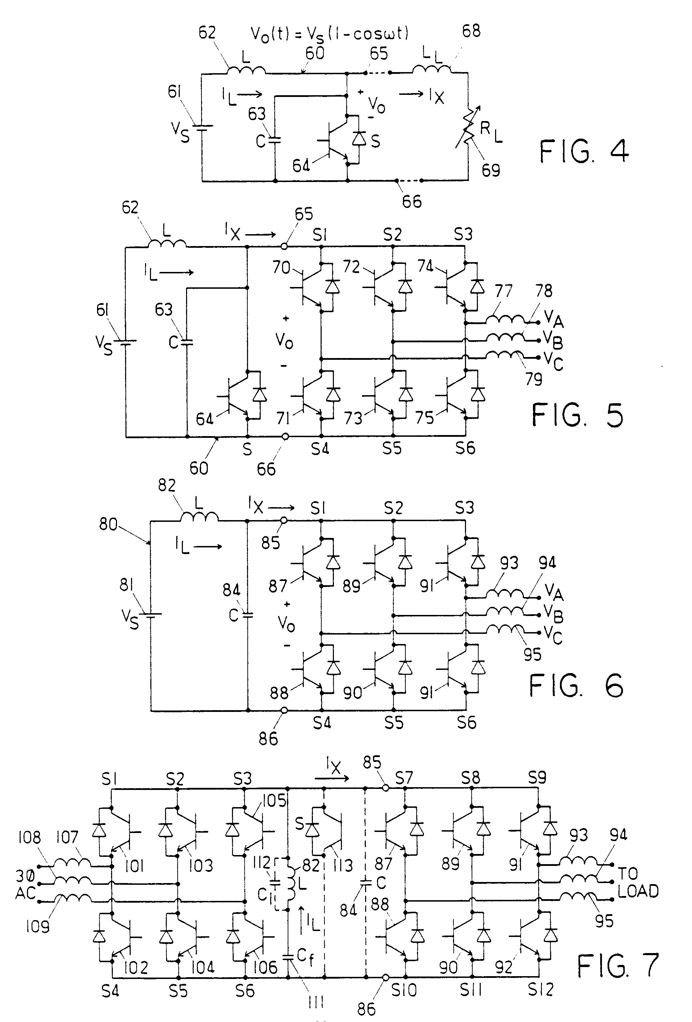

This circuit structure may be readily extended to a three-phase AC to three-phase AC converter by utilizing a conventional three-phase rectifying converter (not shown) connected to three-phase AC mains as the DC voltage supply 21. The operation of this type of voltage source is described further below with respect to the circuit of Fig. 7. The rectifying devices in the AC to DC converter are preferably gated switching devices which may also now be switched on the zero voltage crossings of the DC bus voltage, eliminating switching losses in the entire system. Such a circuit is completely symmetric and may thus be made fully regenerative, allowing transfer of power back and forth between the AC sides, with zero switching losses and low energy storage, and without the need for snubbers. Such a configuration is insensitive to diode recovery time and variations in device storage or turn-off times. During the switching transients, the DC bus voltage automatically continues at zero until the last device has recovered its blocking characteristic.

Where pulse width modulation is used with the inverter of the circuit shown in Fig. 2, very rapid changes in the DC link current drawn by the inverter may occur. This DC current ripple can excite the resonant tank circuit composed of capacitor 29 and inductor 30 and can result in an undesirable modulation of the DC bus voltage. To meet these peak current conditions, the inductor and capacitor of the resonant circuit and the switching devices of the H-bridge should be selected appropriately to handle the stresses imposed.

An alternative DC resonant link configuration 60 in accordance with the invention is shown in Fig. 4 and

EP 0 292 512 B1

includes a DC voltage power supply 61, a series DC resonant link inductor 62 (of inductance L), a capacitor 63 (of capacitance C), and a gated switching device 64 connected across the DC bus terminals 65 and 66 of the resonant link. The inductor 62 and capacitor 63 are connected together to form a resonant tank circuit. For illustration, the terminals of the DC link bus 65 and 66 are connected to a load which includes a load inductor 68 and load resistor 69. To illustrate the operation of the circuit 60, assume that the power supply 61 is initially disconnected from the circuit. If the voltage $V_s$ from the power supply 61 is now applied to the system with the switch 64 off (open circuited), for a loss-less inductor 62 and capacitor 63, the output voltage $V_o$ (with the terminals 65 and 66 disconnected from the load) will vary between $V_s$ and zero and have an average value of one-half $V_s$, with the output voltage varying at the resonant frequency of the LC resonant circuit composed of the inductor 62 and capacitor 63. Every cycle, the output voltage $V_o$ will return to zero volts, thus setting up the desired condition where loss-less switching may take place. For practical LC circuits having finite Q factors, the output voltage $V_0$ will never return to zero and will finally stabilize at $V_s$. However, if the switch 64 is maintained on (conducting) while applying the voltage $V_s$ from the power supply 61, the current in the inductor 62 increases linearly. The switch 64 may then be turned off when sufficient energy is stored in the inductor to ensure that the output voltage $V_0$ will return to zero. At that point the switch 64 may be turned on once again to repeat the process and establish a stable oscillation of the resonant circuit, thereby forming a stable DC resonant link voltage at the DC bus terminals 65 and 66. There will be sufficient current in the inductor 62 to bring the voltage across the capacitor 63 to zero when (with reference to Fig. 4) the current difference $I_L - I_X$ is greater than a quantity $I_{min}$, where $I_{min} = KV_s/Z_0$, K is a selected constant determined to account for parasitic losses, and $Z_0$ is the characterstic impedance of the tank circuit: $(L/C)^{1/2}$.

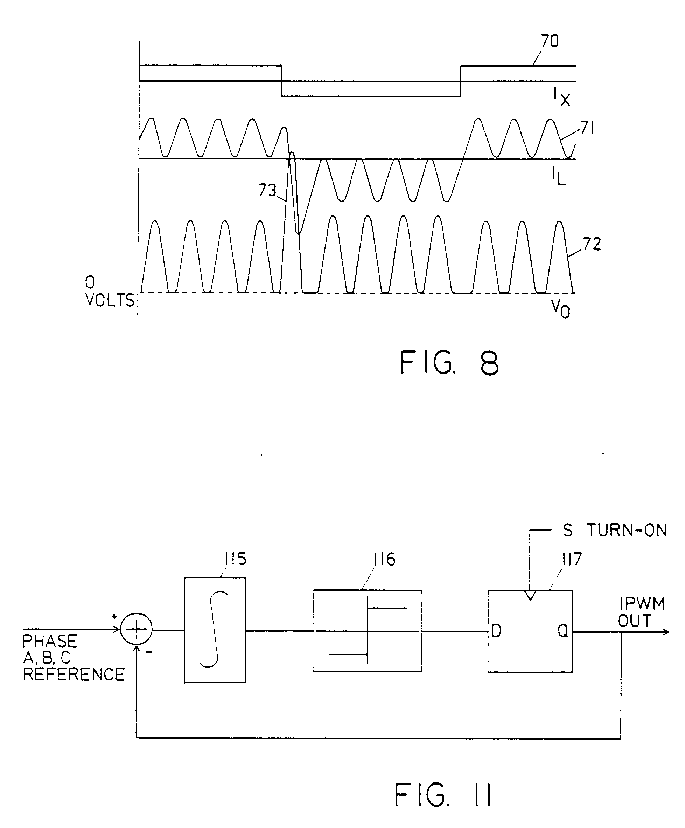

The response of the circuit of Fig. 4 to load current demands $I_X$ is illustrated in Fig. 8. For a load current $I_X$ which has a square waveform as illustrated by the graph 70, imposing sharp changes in current demand on the DC resonant link, the resulting inductor current $I_L$ as the switching of the load current occurs is illustrated by the graph 71, and the resonant link output voltage $V_0$ during the switching periods is illustrated by the graph 71. The transition of the load current $I_X$ illustrated in Fig. 8 is analogous to the transition seen in driving a motor from the motoring to the regenerating mode and back again. During the first transition from motoring to regenerating, a large overshoot 73 is observed in the output voltage $V_0$ for one resonant cycle. In the second transition from regenerating to motoring, very little change in either resonant link current or voltage occurs, a desirable deadbeat characteristic. The voltage overshoot 73 may be easily contained by utilizing a voltage clamping type energy recovery circuit without affecting the transient performance of the system.

The resonant link circuit of Fig. 4 can readily be extended to provide an AC output by connecting an inverter to the DC bus terminals 65 and 66, as illustrated in Fig. 5. The inverter is composed of pairs of gate turn-off switching devices (e.g., bipolar transistors) 70 and 71, 72 and 73, and 74 and 75, having output lines 77, 78 and 79 on which voltages $V_A$, $V_B$ and $V_C$ are provided. Again, as described above with respect to the circuit of Fig. 2, a control strategy similar to pulse width modulation with discrete switching instants allowed may be utilized to provide the AC output waveforms on the line 77-79 with each of the switching devices 70-75 synchronized to switch at the points in time at which the voltage across the DC bus terminals 65 and 66 goes to zero. Proper control of the switching of the devices 64 and 70-75 requires that the current difference $I_L - I_X$ be monitored to determine when sufficient excess energy is stored in the inductor 62 to ensure that the voltage $V_0$ across the terminal 65 and 66 can be returned to zero.

It may be noted from a review of the circuit structure of Fig. 5 that the switching device 64 is connected in parallel across the DC bus terminals 65 and 66 with any of the per phase pairs of switching devices 70-75. Thus, the switching device 64 is essentially redundant and its function may be performed by any one of the pairs of per phase switching devices. A power converter circuit 80 which performs DC to three-phase AC conversion in this manner is illustrated in Fig. 6. This circuit has a power source 81 of direct current voltage $V_s$, a series inductor 82 of inductance L, and a capacitor 84 of capacitance C connected across the DC bus terminals 85 and 86 which forms a resonant circuit with the inductor 82. An inverter is connected to the DC bus terminals 85 and 86 and is composed of per phase pairs of switching devices (e.g., bipolar transistors) 87 and 88, 89 and 90, and 91 and 92, having output lines 93, 94 and 95, which should have associated load inductances, on which appear voltages $V_A$, $V_B$ and $V_C$. Again, switching of the inverter devices 87-92 is accomplished in the manner described above to provide modulation of the inverter stage, with the additional requirement that one of the per phase pairs of switching devices is periodically closed together to short across the capacitor 84 and provide the required charging current to the inductor 82 to maintain oscillations in the LC resonant circuit composed of the inductor 82 and capacitor 84.

A three-phase AC to three-phase AC power conversion system may readily be derived from the basic circuits of Fig. 5 or Fig. 6. Fig. 7 illustrates such an AC to AC inverter utilizing the system of Fig. 6 and having a controllable rectifying converter formed of pairs of gate controlled switching devices (e.g., bipolar transistors) 101 and 102, 103 and 104, and 105 and 106, receiving input AC power on input lines 107, 108 and 109 which

6

each include a series inductance, for example the leakage inductance of the supply transformer. The inductances in the input lines 107, 108 and 109 allow the rectifying converter to provide substantially constant current output to the resonant tank circuit and DC bus during a resonant cycle of the DC bus voltage. To provide a substantially constant average DC voltage at the DC bus terminals 85 and 86, a relatively large electrolytic filter capacitor 111 (of capacitance $C_f$) is connected in series with the inductor 82, and both are connected between the terminals 85 and 86. The filter capacitor 111 functions as a DC voltage source having an average voltage $V_s$. The capacitor 111 is charged by the uni-directional pulses from the converter composed of the switching devices 101 to 106, passed through the inductor 82. As an alternative to the capacitor 84, a capacitor 112 may be connected across the inductor 82 to form a resonant circuit with the inductor 82. The circuit of Fig. 7 is adapted to drive oscillations in the resonant tank circuit composed of the inductor 82 and capacitor 84 (or capacitor 112) byselectively turning on one of the per phase pairs of inverter switching devices 87-92 to provide a shunt across the DC bus terminals 86, thereby allowing the capacitor 111 to discharge through the inductor 82 to build up a current in the inductor sufficient to cause the voltage across the capacitor 84, and thus the voltage at the output bus terminals 85 and 86, to go to zero during each cycle. Alternatively, a separate switching device 113 may be connected across the DC bus terminals 85 and 86 to accomplish this function in the manner of the DC link circuit 60 of Fig. 5. By switching all of the gate controlled switching devices at the points of zero voltage across the DC bus terminals 85 and 86, substantially no switching losses occur. The circuit is seen to be completely symmetric and fully regenerative, allowing transfer of power in either direction between the input terminals 107-109 and the load terminals 93-95. Several significant advantages characterize this circuit structure. By adding one small inductor and a small capacitor to a conventional voltage source inverter, which would ordinarily include an electrolytic filter capacitor such as the capacitor 111 on the output of the rectifying converter, switching losses are substantially eliminated and it is possible to greatly increase the inverter efficiency and the switching frequency. Active control of the current $I_L - I_X$ ensures that each resonant cycle starts with the same initial conditions. Thus, the resonant cycle is controlled in a deadbeat manner, independent of the actual value of the DC link current, $I_X$. Consequently, there is substantially no sustained DC bus modulation and the required sizes of the resonant elements are small.

It should be understood that the resonant circuit configurations illustrated in Figs. 1, 2, and 4 - 7 are only illustrative, and many other equivalent configurations will be apparent. For example, in the circuits of Figs. 5 and 6, the capacitors 63 and 84 may be moved and connected in parallel with the inductors 62 and 82, respectively. In the circuit of Fig. 7, the capacitor 84 may be split and equivalent capacitances connected across the individual gate turn off devices 87 - 92.

Because of the substantial elimination of switching losses, power converters in accordance with the present invention are substantially more efficient than conventional converters. For example, a typical conventional pulse width modulated converter operating at a DC supply voltage of 150 volts, providing 30 amperes at a switching frequency of 20 kHz (4.5 kW rating), using switching transistors having a rise time of 1 microsecond and a fall time of 2 microseconds, and having a snubber capacitor of a size of 0.2 microfarads with associated inductance of 5 microhenrys, has a total power dissipation in switching losses of 630 watts and an efficiency of 87 percent. Utilizing the H-bridge resonant inverter of the form shown in Fig. 2, having the same transistor switches and a resonant capacitor of 3.2 microfarads and resonant inductor of 19.8 microhenrys, the total power dissipation is 330 watts and the efficiency is 93.1 percent. For a single transistor DC link inverter of the type shown in Fig. 5, having the same transistor switches and a resonant capacitor of 0.75 microfarads and an inductor of 85 microhenrys, the power dissipated in the LC resonant circuit is 133 watts, for an efficiency of 97.1 percent. The only significant constraint on device operating characteristics is that the switching devices be capable of handling peak voltages of at least twice the DC supply voltage which are imposed on the device during switching transients. Because the switching losses are essentially zero, greater conduction losses are permitted, allowing the switching devices to be used at their optimum thermal ratings. The greater current that can thus be drawn through the devices substantially compensates for the greater voltage ratings required to withstand the increased switching transient voltages. Of course, the switching devices may be switched at DC bus voltages which are substantially zero, i.e., a few volts above zero as long as excessive transient currents are not imposed on the device. The switching losses will commensurately increase,and efficiency will decrease, as switching is done further from the ideal condition of zero voltage. Furthermore, as illustrated in the waveform of Fig. 8, once the DC bus voltage reaches zero and switching occurs, the voltage on the DC bus remains at zero until all switching of devices is completed. Various devices are available which can be utilized, including bipolar junction transistor, gate turn off thyristors, power field effect transistors, etc.

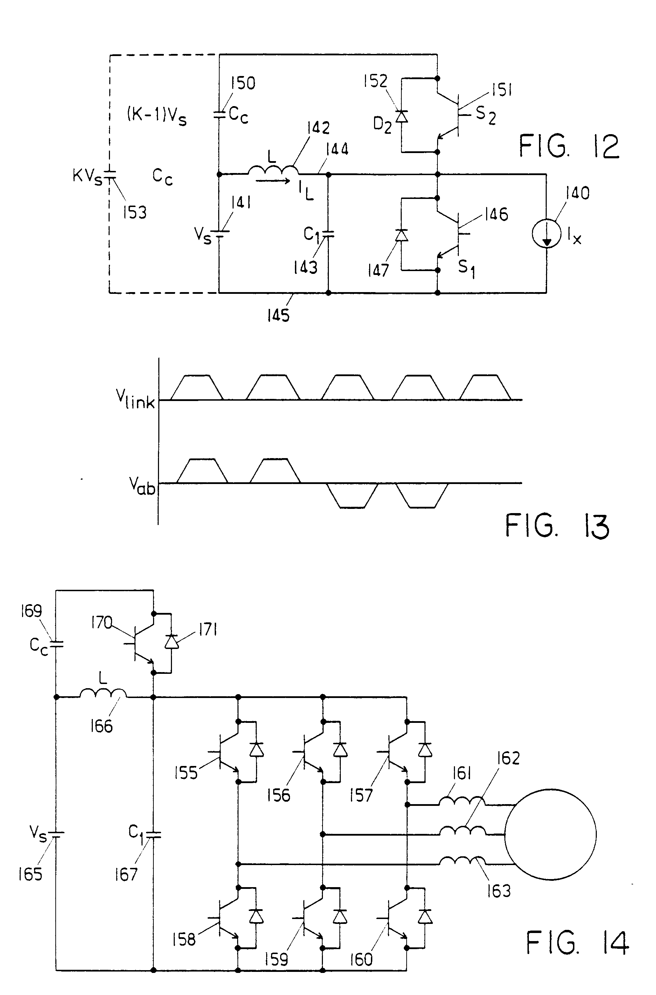

From the discussion above, it is apparent that various means are available for maintaining stable oscillations of the LC resonant circuit such that the voltage across the DC bus terminals returns to zero. These include the H-bridge of Fig. 2, the single transistor switch of Fig. 5, and the system of Fig. 6 in which the function of the switch of Fig. 5 is carried out by pairs of the switching devices in the inverter. With reference to the circuit of Fig. 5, the control sequence can be illustrated for both the single switch case and the case in which the switch is incorporated in the inverter. Initially, the single switch 64 or one of the switch combinations 70-71, 72-73, or 74-75 is kept on while the voltage $V_s$ from the source 61 is applied. With the DC bus terminals 65 and 66 short circuited, the voltage across the terminals equals zero and the inductor current $I_L$ increases linearly with time. The current difference ($I_L$ - $I_X$) is monitored (for the circuit of Fig. 5 wherein the single switch 64 is used) to determine when the current available for charging the capacitor increases above the minimum calculated value $I_{min}$ which will ensure that the capacitor can be discharged sufficiently to bring the voltage across the DC bus terminals to zero. Where pairs of switches are used to short the DC bus, the current in the other switch pairs must be accounted for to determine the current available for charging the capacitor. When the current $I_{min}$ is reached, the switch 64 (or one of the equivalent pairs of per phase devices) is turned off (at a point of zero DC bus voltage) to start the resonant cycle. The appropriate switches 70-75 are also turned on in the proper sequence as desired to provide the output voltages on the terminals 77-79 and the voltage $V_0$ between the DC bus terminals now goes above zero. When the voltage $V_0$ across the bus terminals returns to zero volts, the switch 64 (or equivalent pairs of switches in the inverters) can now be turned on and any or all of the switches 70-75 (as desired) can now also be switched according to control signals from a control modulator. One control modulator implementation that may be used is the delta modulator shown in Fig. 11, which compares a desired reference signal for each phase with the integral pulse width modulated output and provides the error signal to an integrator 115 and comparator 116. The switching of the inverter devices 70-75 is synchronized to the switching of the oscillator switch 64 which is itself synchronized with the points in time at which the bus voltage $V_0$ across the terminals 65 and 66 reaches zero by passing the output of the comparator 116 to a flip-flop 117 which is clocked by a signal which provides pulses when the DC bus voltage substantially reaches zero.

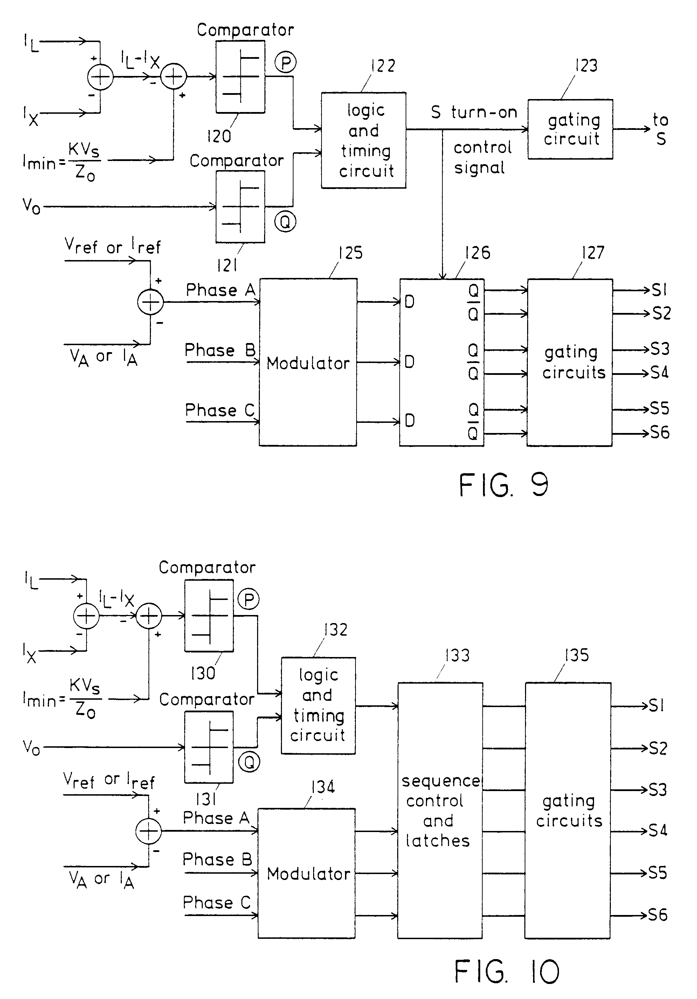

A control system for controlling the switching of the single oscillator transistor 64 and the inverter transistor 70-75 which incorporates the modulator structure of Fig. 11 is shown in Fig. 9. The inductor current $I_L$, the load current $I_X$, the voltage $V_0$ across the terminals 65 and 66 of the DC bus, and the phase voltages or currents are monitored. The difference between the inductor current $I_L$ and the load current $I_X$ is subtracted from a calculated minimum current $I_{min}$ required to maintain oscillations. The differences are provided to a comparator 120 which switches outputs when the difference is negative. The voltage across the DC bus, $V_0$, is provided to a comparator 121 which switches when the bus voltage reaches zero. The outputs of the comparators 120 and 121 are provided to a logic and timing circuit 122 which uses these signals to provide an output enable or turn-on signal which allows turn-on of the various switches when the conditions from both comparators are satisfied. The turn-on signal from the circuit 122 is provided to a gating circuit 123 which provides the proper gate driving signals to the switch 64 so that this switch may be turned on until the comparator 120 changes condition. This then ensures excitation of the LC resonant circuit composed of the inductor 62 and capacitor 63 sufficient to maintain oscillation. The inverter is controlled in a conventional manner with either a voltage reference or a current reference being compared with each phase voltage or current and provided to a modulator 125 which may be implemented as shown in Fig. 11. The modulated output signal is provided to a latch 126 which receives the synchronization signal from the logic circuit 122 to synchronize changes in the output of the latch 126 with the times of zero voltage across the DC bus. The outputs of the latch 126 are provided to gating circuits 127 which provide proper gating drives to the gate inputs of the switching devices 70-75.

For a power converter in which the function of the single switch 64 is performed by a series combination of the devices 70, 71 ($S_1$, $S_4$), 72, 73 ($S_2$, $S_5$), or 74, 75 ($S_3$, $S_6$), as in the circuit of Fig. 7, additional control circuitry is needed to sequence the shorting gate signals to the switches 70-75. A control circuit for performing these control functions is shown in Fig. 10. As before, the difference between the inductor current $I_L$ and the load current $I_X$ (accounting for current in the non-shorting switches) is subtracted from the calculated $I_{min}$ and the overall difference provided to a comparator 130 which switches when the difference goes between positive and negative values. The voltage between the DC bus terminals $V_{bus}$ is also provided to a comparator 131 which switches when the bus voltage reaches zero. The outputs of the comparators 130 and 131 are provided to a logic and timing circuit which provides a synchronization signal to a sequence control and latch circuit 133. The differences between the voltage or current reference and the actual voltage or current for each phase are provided to a modulator 134 of any suitable design, such as the modulator structure of Fig. 11, and the output of the modulator is also provided to the sequence control and latch circuit 133. The output of this circuit is provided to gating circuits 135 which provide the proper gating signals to the switches 70-75 to fire them either in sequence to short out the capacitor or to provide the output voltages on the phases. For a circuit of the type shown in Fig. 7, in which pairs of gated devices are utilized for the input conversion of the AC input power to the DC level, the per phase pairs of rectifying converter switches 101-106 may alternatively be turned on in pairs to short out the capacitor 84. In either case, proper system operation requires that the power supplied to the load, plus the losses in the conversion system, must equal the power input from the power system lines. A reasonable control strategy minimizes harmonics on both the AC power line and load sides and operates with unity power factor on the AC power supply side. It is preferred that the controllers operate so as to minimize the difference between the instantaneous input power and the instantaneous sum of output power plus losses, such that the system has a minimum energy storage requirement and requires only a relatively small filter capacitor 111.

Utilizing a control scheme of this type, with switching in the DC link at a resonant frequency of approximately 18 kHz or higher, a significant reduction in the audible noise generated by the inverter-motor system as compared with conventional pulse width modulated systems is noted. This improvement is partly due to the non-stationary characteristics of the output signal due to non-synchronous references and bus oscillation frequencies. No dominant spectral harmonic components are observed in the inverter line to line voltage in the audible frequency range under normal operating conditions. The motor-inverter combination of the present invention produces only a relatively low level hissing sound rather than the extremely loud whine associated with conventional PWM systems. It is believed that the lower noise levels may be due also in part to the fact that the change in voltages with respect to time experienced by the motor windings is much less severe in the present motor-inverter system than in conventional PWM systems.

In addition to the obvious efficiency advantages of the present conversion system, which has substantially no switching losses, by eliminating switching losses it is also possible to significantly reduce the size and expense of the heat sinks required for the switching transistors or alternatively to increase the conduction losses permissible in a given device, thus raising its useful current carrying capacity at a given frequency.

As noted from the waveforms of Fig. 8, switching device voltage stresses of 2.5 to 3 times the effective DC supply voltage $V_s$ may be imposed on the switching devices from time to time. Thus, the voltage ratings of the devices must be sufficient to withstand these stresses. Voltage stresses for the resonant DC link inverter result from the resonant action of the LC elements in the DC link and the modulation strategy used in the inverter section. Under steady state conditions (i.e., with specified inverter switches), the DC link resonant cycle is always started with a fixed value of initial capacitor current. This insures a "deadbeat" resonant pulse response, even in the presence of modulation. Under these conditions, volt-second balance across the inductor in the tank requires peak voltage stresses across the devices of at least two $V_s$. Under transient conditions, when instantaneous power flow reverses and DC link current switches and flows back into the DC supply, a 1-cycle transient is obtained during which the peak voltage stress exceeds the steady state values.

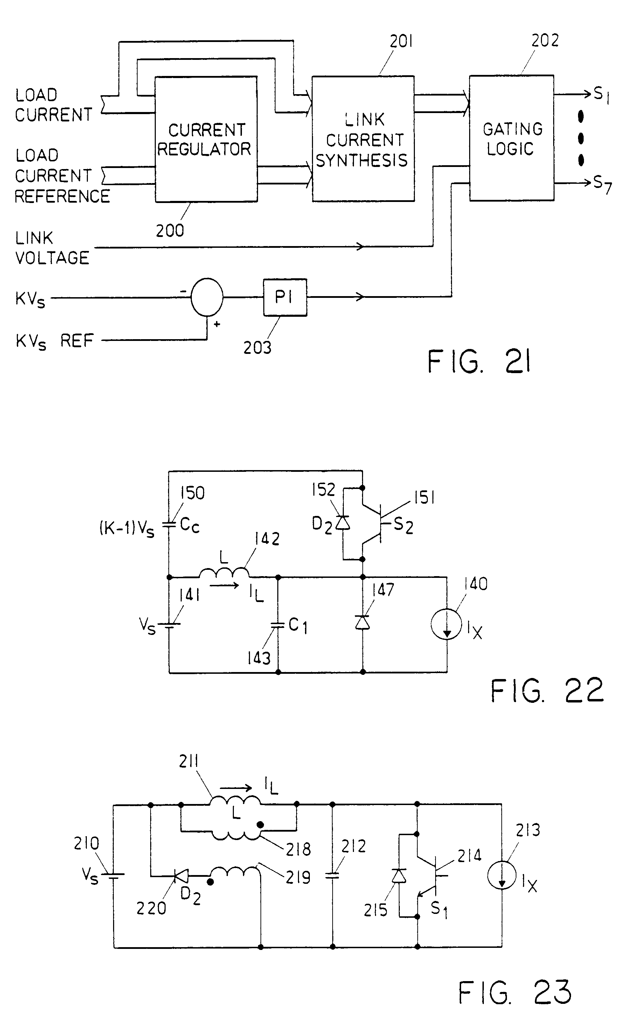

The voltage stress across the DC bus may be limited by a passive clamp circuit, a example of which is shown in Fig. 23 and described further below, which limits the peak voltage across the bus to less than 2.5 $V_s$. The clamping voltage has to be greater than the steady state peak voltage stress. Assuming a high-Q, LC-circuit, it is seen that under steady state conditions, the energy in the tank is conserved, except for losses. The resonant DC link system is operated so as to compensate for these losses via control of the duration over which the bus is shorted. Sufficient excess energy must be stored in the inductor to ensure a return of the DC link voltage to zero to establish the desired zero voltage switching conditions. If the peak voltage is limited to a value lower than 2 $V_s$, substantial energy will be removed from the resonant tank making it impossible for the DC bus oscillations to continue. Oscillations can be sustained at a clamping voltage less than $2V_s$ if sufficient energy is returned from the clamp to the resonant tank during each cycle in which clamping occurs.

Fig. 12 illustrates an inverter circuit in accordance with the present invention which implements an active clamping means which allows oscillations in the tank to be sustained. The circuit of Fig. 12 is equivalent to the circuit shown in Fig. 4 above, wherein the DC bus current $I_x$ is represented by the current source 140. This circuit includes a DC voltage source 141, and a tank circuit formed of a series inductor 142 and a capacitor 143, the latter connected across the DC bus formed by the lines 144 and 145. A transistor switch 146 with anti-parallel diode 147 is connected across the DC bus and is controlled as described above to maintain the desired oscillations of the DC bus voltage. In addition, an active clamping means is connected across the tank inductor 142 and is composed of a voltage supply capacitor 150 and a transistor switch 151 with anti-parallel diode 152. The voltage supplied by the clamping capacitor 150 may also be supplied by a voltage source, such as a battery, although the clamping capacitor is preferred since it is a completely passive and relatively inexpensive device and an actual voltage source is not needed as the capacitor 150 is periodically recharged during the operation of the clamping circuit as explained further below. The capacitor 150 is preferably an electrolytic capacitor which is pre-charged to the desired voltage level, represented as a value equal to $(K-1) V_s$ where K is chosen as described below and $V_s$ is a desired operating voltage, here the DC supply voltage. Of course, the capacitor 150 could be connected to ground rather than to the voltage source, in a connection configuration as illustrated by the capacitor 153 shown in Fig. 12, in which case the capacitor 153 would charge to a voltage $KV_s$.

In the manner described above for resonant DC link inverter operation, the DC bus is initially shorted by the transistor switch 146 to allow precharging of the current through the inductor 142. When the switch 146 is opened, the voltage across the DC bus resonates toward its natural peak. On reaching a voltage $KV_s$, the diode 152 turns on and clamps the bus voltage to that level. With the diode 152 conducting, the switching device 151 may then be turned on in a lossless manner. The current flow eventually transfers from the diode 152 to the transistor 151. Assuming that the clamping capacitor 150 is sufficiently large, there will be relatively little voltage rise across the DC bus and the DC bus will be effectively clamped at the voltage level $KV_s$ although it may increase slightly from this level as the capacitor 150 is charged up. Eventually, the capacitor 150 begins to discharge through the switching device 151 to return the energy stored in it to the tank circuit. When the net charge transferred to the clamping capacitor 150 is zero, the switching transistor 151 is turned off and the tank circuit composed of the inductor 152 and capacitor 153 resonates in the manner described above until the DC bus voltage reaches zero, at which time the transistor 146 is turned on. At this point, the resonant cycle can be reinitiated in the manner described above for the circuit of Fig. 4. Fig. 13 illustrates the waveforms for the actively clamped resonant DC link.

Fig. 14 shows a detailed schematic of a three phase actively clamped resonant DC link inverter having switching devices 155-160 and effective output inductances 161-163. The circuit includes a DC voltage supply 165 and a resonant tank composed of an inductor 166 and a capacitor 167. This circuit functions in the manner described above for the circuit of Fig. 6. An active clamping circuit composed of a clamping capacitor 169 and the combination of a transistor switch 170 and anti-parallel diode 171 is connected across the inductor 166 and functions in the manner as described above for the active clamp in the circuit of Fig. 12. Because the clamping voltage $KV_s$ is greater than the supply voltage, $V_s$, this configuration may be referred to as a boost clamp resonant DC link inverter.

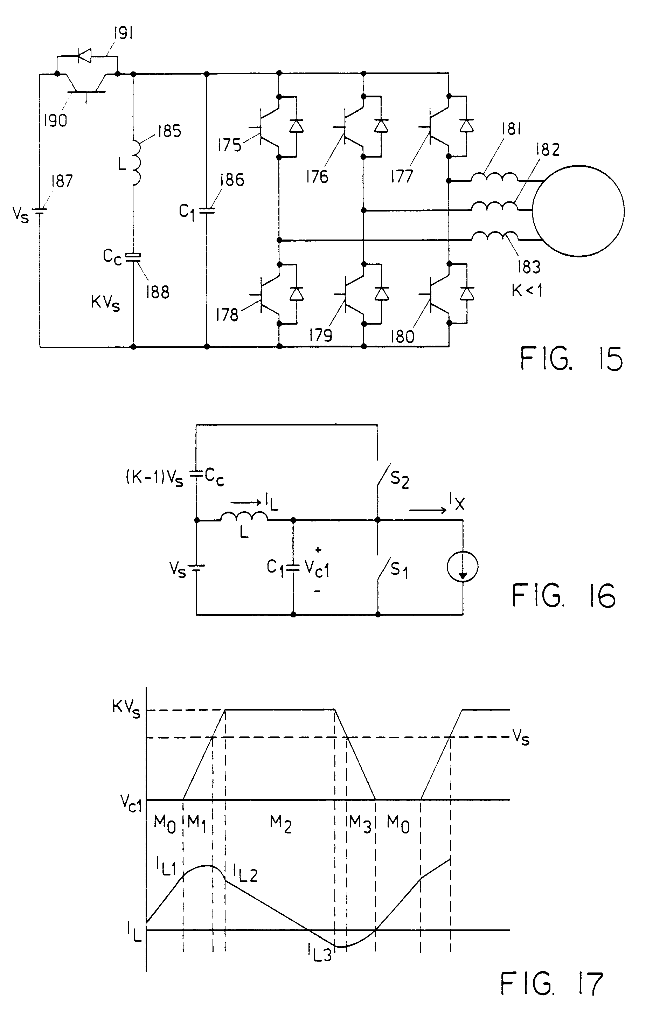

An alternative actively clamped configuration for a 3-phase inverter is shown in Fig. 15. This circuit includes an inverter composed of switching devices 175-180 which supply output through output inductors 181-183. A tank circuit, composed of a parallel connected inductor 185 and capacitor 186 is connected across the DC bus, receives voltage from a DC voltage source 187 and functions in a manner as described above for the circuit of Fig. 7. A clamping capacitor 188 is connected in series with the inductor 185, charged to an initial voltage $KV_s$, and a switching transistor 190 with anti-parallel diode 191 is connected between the voltage source 187 and the DC bus, effective in series with the inductor 185. In this configuration, the DC bus voltage is clamped at $V_s$ inasmuch as when the maximum voltage across the DC bus exceeds $V_s$, the diode 191 conducts. The average voltage on the bus is lower than $V_s$. This circuit configuration may be called a buck output resonant DC link inverter. Generally, the boost clamp configuration is preferred over the buck clamp configuration because the former configuration maximizes the utilization of the available supply voltage. It is readily apparent that both actively clamped configurations can be extended to realize 3-phase AC to 3-phase AC conversion in the manner described above, with particular reference to the circuit of Fig. 7.

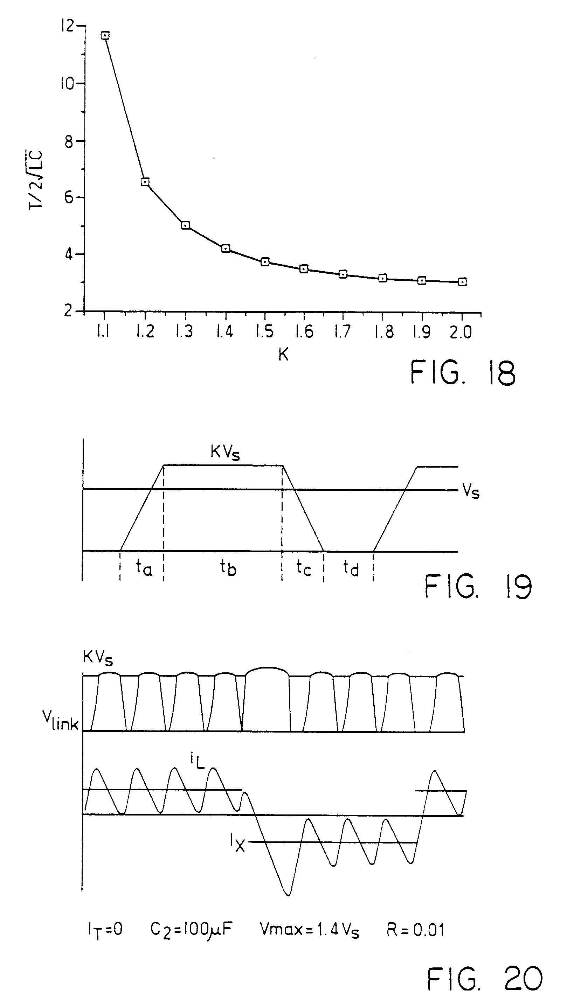

The analysis of the actively clamped resonant dc link inverter can be best illustrated using the simplified equivalent circuit shown in Fig. 16. During a resonant cycle, given the positions of all the inverter switches the dc link current can be replaced by a constant current source, $I_x$. Assuming that a large clamping capacitor, $C_c$ is used, an essentially constant ripple free clamping voltage, $KV_s$ will result. Figure 17 shows important waveforms and identifies the various modes of operation. Mode 0 occurs with the dc bus shorted. Mode 0 changes to Mode 1 when the inductor current $i_{L1} = I_{L1}$, where

$$I_{L1} = I_x + I_T$$

and $I_T$ is the "trip" current level established to turn $S_1$ off. The energy in the LC-circuit at the start of Mode 1 is

$$E_1 = LI_{L1}$$

Mode 2 begins when the capacitor voltage $V_{c1}$ reaches $KV_s$ and the clamp operates. Using energy balance,

$$\frac{1}{2}LI_{L1}^2 + V_s\int_0^{t_1} i_L dt = \frac{1}{2}LI_{L2}^2 + \frac{1}{2}C_1 K^2 v^2$$

where $I_{L2}$ is the inductor current at the beginning of Mode 2. Solving for $I_{L2}$ gives

$$I_{L2} = I_x \pm \sqrt{I_T^2 + \frac{KV_s^2(2-K)}{z_0^2}}$$

With the clamp operating as $C_c$ is assumed infinite, the inductor current decreases linearly from $IL_2$. Mode 2

EP 0 292 512 B1

ends when the net charge transferred into the capacitor $C_c$ is zero. This ensures that the voltage, $KV_s$, is maintained under steady state conditions. The time, $T_2$, over which Mode 2 holds can thus be found to be

$$T_2 = \frac{2L\,(I_{L2}-I_x)}{(K-1)V_s}$$

This also gives the value of inductor current at the start of Mode 3 to be

$$I_{L3} = 2I_x - I_{L2}$$

Mode 3 analysis can be done in a manner similar to Mode 1 to give $I_{L4}$, the inductor current at the end of Mode 3.

$$I_{L4} = I_x - \sqrt{(I_x - I_{L3})^2 - \frac{KV_s^2(2-K)}{z_0^2}}$$

Although $I_T$ has to be finite in a real circuit with lossy components, an estimate of circuit behavior can be obtained by assuming lossless operation with $I_T = 0$. Under these conditions, the dwell time with $V_{c1} = 0$ reduces to zero for constant dc link current $I_x$. The periodthe of resonant link cycle can then be calculated

$$2\sqrt{LC_1}\,(\cos^{-1}(1\text{-}K) + \frac{\sqrt{K(2-K)}}{K-1})$$

Figure 18 shows a plot of (T/2 LC) as a function of K. The case for K 2 degenerates into a normal passively clamped resonant dc link inverter. For clamping voltages less than $2V_s$, the link frequency decreases with decreasing K, approaching zero for K = 1. This suggests that with given components, there is a limit below which it is not practical to clamp.

The actual resonant link waveform is governed to a substantial degree by device characteristics. Figure 19 shows a linear approximation to the dc link bus waveform. If the objective of lossless switching is to be accomplished, it is obvious that $t_a$ and $t_c$ shown in Figure 19 need to be substantially greater that the device turn on and turn off parameters $t_f$ and $t_r$ respectively. Further, even if system losses are neglected, the time $t_c$ needs to be greater than or equal to the device storage time, $t_s$.

Using simple geometry and equalizing volt-seconds across the inductor, L, the following relationships can be obtained for the case when $t_a = t_c$.

$$t_b = \frac{t_d + t_a(2-K)}{(K-1)}$$

$$T = \left[\frac{K}{K-1}\right](t_a + t_d)$$

Thus, for devices with $t_r = t_f = 2\mu s$ and $t_s = 10\mu s$, if we assume that K = 1.4 and $t_a = t_c = 3t_r = 6\mu s$, the steady state resonant link frequency would be 17.8kHz, while the clamping interval $t_b$ would be 34 s. Given the absence of reverse biased secondary breakdown under zero voltage switching, the storage time could be substantially reduced, thus increasing the maximum switching frequency achievable.

It is fairly clear that using a simple capacitor clamp (as opposed to a voltage source clamp) requires no net gain or loss of stored charge. Figure 20 shows a simulation of the active clamped inverter with a finite value of clamping capacitor, $C_c$. It can be seen that a per cycle charge balance strategy ensures that the system operates with a simple capacitor clamp. In a real inverter, device storage times are not very predictable, and consequently the system would then need to be handled by additional circuitry.

An alternate strategy can be devised by realizing that two control instants actually exist. These correspond to the turn-off of $S_1$ and $S_2$, denoted by the start of Mode 1 and Mode 3 respectively. Two trip currents $I_{T1} = (I_{L1} - I_x)$ and $I_{T2} = (I_{L3} - I_x)$ can now be denotes at the corresponding instants. Control of $I_{T2}$ is necessart to ensure that the LC circuit has sufficient energy to resonate that the dc link voltage down to zero. $I_{T1}$ can then be controlled independently so as to regulate the average value of the clamp capacitor voltage. Decoupling the control points in this fashion permits a a very robust and stable control of the ACRL inverter.

Figure 21 shows a schematic block diagram of the controller required for inverter operation. In this control implementation, the measured load current and a load current reference are provided to a current regulator 200 which supplies an output correction signal to a link current synthesizer 201, which also receives the load

11

current. The circuit 201 determines the appropriate modulation strategies and supplies gating logic 202, which also receives the link voltage and the output of a proportional-integral controller 203 for $KV_s$ feedback.

Control of the inverter stage is synchronized to the zero voltage durations of the dc link. Consequently, the inverter line-line voltage exhibits discrete pulses and a delta modulation type of strategy is suitable for inverter control. For voltage synthesis, a sigma delta modulation strategy seems indicated, while current regulators are best realized by current regulated delta modulators. Delta modulators for control systems are in the family of uniformly sampled, zero-hysteresis, bang-bang controllers. It has been shown that given a device type, a delta modulation strategy utilizing a zero voltage switched resonant link inverter is capable of superior performance when compared to a hard switched pulse width modulated type of voltage source inverter. Other modulation stratigies using discrete pulse produlation techniques are also possible.

A schematic circuit diagram of an inverter apparatus in accordance with the present invention having an active clamp with an alternative switching strategy is shown in Fig. 22. The circuit of Fig. 22 is substantially identical to the circuit of Fig. 12 except that the active switch 146 is eliminated. In the operation of the circuit of Fig. 22, the active switch 151 is now kept on until the current in the inductor 142 builds up to a level which is greater than or equal to the minimum current required to bring the voltage of the capacitor 143 down to zero. If the value K for this circuit is between 1 and 2, and preferably between 1.1 and 1.4, there is always sufficient energy to take the voltage of the capacitor 143 back to $KV_s$, at which level the active clamp action can be initiated. Turn off of the switch 151 in this active clamp is controlled so as to yield the desired clamping voltage level. It may be noted that the inverter of Fig. 14 may also be operated in this mode since the anti-parallel diodes in the 3-phase bridge serve the function of the single diode 147 shown in Fig. 22. When operating in this mode, the trip current is automatically set to zero.

Although not preferred, the inverter of the present invention can be operated utilizing passive clamping of the voltage across the DC bus. An example of such a passive clamp is illustrated in the circuit of Fig. 23 which has a voltage source 210, a resonant tank inductor 211, a resonant tank compacitor 212 connected across the DC bus, a current source 213 representing the effective output current, and an active switch 214 with anti-parallel diode 215 connected across the DC bus. A transformer is connected with one side thereof to 18, primary or secondary, and parallel with the inductor 211 and the other side of the transformer 219 connected across the power source 210 in series with a clamping diode 220. The clamping voltage must be greater than the steady state peak voltage stress. Assuming a high -QLC-circuit, under steady state conditions the energy in the tank is conserved, except for resistive losses. The resonant DC link system is then operated to compensate for these losses by control of the time during which the DC bus is shorted. Sufficient excess energy must be stored in the inductor 211 to insure a return of the DC link voltage to zero so as to establish the zero voltage switching conditions desired. Consequently, if the peak voltage stress is limited to a value lower than $2V_s$, the energy removed by the passive clamp composed of the transformer 218-219 and the diode 220, with resistive losses, results in insufficient energy being removed from the resonant tank so that the DC bus oscillations cannot continue. Thus, a passive clamp, such as that illustrated in Fig. 23, can be used where it is desired to limit the maximum voltage stresses between $2V_s$ and $2.5V_s$.

**Claims**

1. A power converter comprising:
(a) a resonant circuit (20) having an inductor (30) adapted to receive a DC power input, a capacitor (29) connected to the inductor, and a DC bus (31,32) providing the output voltage from the resonant circuit (20), characterised by
(b) means (24-27) for causing the resonant circuit to oscillate stably at or below its resonant frequency and for the voltage across the DC bus (31,32) to be maintained at an average DC level and to go to zero voltage at least once during each cycle of oscillation of the resonant circuit; and
(c) an inverter (40) connected to receive the voltage on the DC bus and having switching devices which are switched only when the voltage on the DC bus (31,32) is substantially zero.

2. A power converter according to claim 1, further including converter means receiving input power at a first frequency for rectifying the input and providing the rectified power to the resonant circuit.

3. A power converter according to claim 1 or 2, further including power supply means (21) for providing DC output power to the resonant circuit.

4. A power converter according to claim 1, 2 or 3, wherein the means for causing the resonant circuit (60) to oscillate includes a controllable switching device (64) connected across the capacitor (63) of the resonant circuit (60) and means for switching the switching device (64) on and off at substantially the points of zero voltage of the capacitor (63) and for shunting the capacitor (63) for a time sufficient to provide a current level in the inductor (62) which will be sufficient to drive the voltage in the capacitor (63) to zero to maintain stable oscillations in the resonant circuit (60).

5. A power converter according to claim 1, 2 or 3, wherein the means for causing the resonant circuit (60) to oscillate includes a switching device (64) connected across the DC bus (65,66) and switched at times of zero voltage on the DC bus (65,66) to develop a current in the inductor (62) sufficient to allow the capacitor (63) to be driven to zero voltage during the oscillation cycle.

6. A power converter according to claim 1, 2 or 3, wherein the means for causing the resonant circuit (60) to oscillate includes a switching device (64) connected across the DC bus (65,66) and controlled to switch at times of zero voltage across the DC bus (65,66) to develop sufficient current in the inductor (62) to maintain steady oscillations in the resonant circuit (60) with the voltage across the capacitor (63) of the resonant circuit going to zero voltage at least once during each cycle of oscillation.

7. A power converter according to claim 1, 2 or 3, wherein the means for causing the resonant circuit (20) to oscillate includes four controllable switching devices (24-27) connected to the DC bus (31,32) in an H-bridge configuration with the inductor (30) and capacitor (29) of the resonant circuit (20) connected across the bridge.

8. A power converter according to claim 1, 2 or 3, wherein the means for causing the resonant circuit (80) to oscillate includes pairs of switching devices (87,88;89,90;91,92) in the inverter which are controlled to switch together to shunt the capacitor (84) to develop a current in the inductor (82) sufficient to allow the voltage in the capacitor (84) to be driven to zero during the oscillation cycle.

9. A power converter according to claim 1, 2 or 3, wherein the means for causing the resonant circuit to oscillate includes series connected pairs of switching devices (87,88;89,90;91,92) connected across the DC bus (85,86) which are switched at times of zero voltage on the DC bus (85,86) to develop sufficient current in the inductor to maintain stable oscillations in the resonant circuit with the voltage across the capacitor (84) of the resonant circuit going to zero during each cycle of oscillation.

10. A power converter according to claim 1, 2 or 3, wherein the inverter includes series connected pairs of gate turn-off switching devices (87,88;89,90;91,92) connected across the DC bus (85,86), each gate turn-off device turned off and on only at times of substantially zero DC bus voltage in a manner such that the voltages between the pairs of gate turn-off devices varies cyclically as a function of time at a desired frequency which is substantially less than the frequency of oscillation of the resonant circuit.

11. A power converter according to claim 1, 2 or 3, wherein the inverter includes pairs of gate turn-off switching devices (87,88;89,90;91,92) connected across the DC bus (85,86), each gate turn-off device turned off and on only at times of substantially zero DC bus voltage in a manner such that the voltages between pairs of gate turnoff devices vary cyclically as a function of time at a desired frequency.

12. A power converter according to any one of claims 8 to 11, wherein the means for causing the resonant circuit to oscillate turns on selected pairs of the gate turn-off devices in the inverter together to provide a shunt across the capacitor of the resonant circuit to develop sufficient current in the inductor of the resonant circuit to allow the capacitor voltage to be driven to zero during the oscillation cycle.

13. A power converter according to claim 1, 2 or 3, wherein the power supply means includes pairs of switching devices connected in a bridge configuration to a source of alternating current power and having outputs connected to provide DC power to the resonant circuit, and wherein the switching devices are switched on and off in a sequence such that average power is provided to the resonant circuit to maintain excitation.

14. A power converter according to claim 1, 2 or 3, wherein the power supply means receives AC power at a first frequency, wherein the resonant circuit oscillates at a second frequency substantially higher than the first frequency, and wherein the inverter provides AC output power at a third frequency which is substantially lower than the second frequency.

15. A resonant DC power supply comprising:

(a) a resonant circuit (80) having an inductor (82) and a capacitor (84) and including a DC output bus (85,86) connected to the resonant circuit; characterised by

(b) a converter including pairs of switching devices (101,102;103,104;105,106) connected in a bridge configuration to receive AC power from an AC power system and to be switched to rectify the AC power to a unidirectional power at an output and including inductance (107,108,109) connected between the AC power system input lines and its unidirectional output and wherein said resonant circuit is connected to the output of the bridge converter switching devices and a power supply capacitor (111) connected in series with the inductor (82);

(c) means (113) for causing the resonant circuit to oscillate stably at or below its resonant frequency such that the voltage across the DC output bus (85,86) goes to zero voltage at least once during each cycle of oscillation and such that an average voltage is maintained across the power supply capacitor (111) and across the DC bus (85,86).

16. The power supply of claim 15, wherein the means for causing the resonant circuit to oscillate includes a switching device (43) connected across the DC bus (85,86) and means for controlling the switching of the switching device to switch at times of zero voltage across the DC bus (85,86) to maintain steady oscillations in the resonant circuit.

17. The power supply of claim 15, wherein the means for causing the resonant circuit to oscillate includes pairs of switching devices (87,88;89,90;91,92) connected across the D bus (85,86) which are switched at times of zero voltage across the DC bus to maintain steady oscillations in the resonant circuit.

18. A power converter according to any preceding claim, further including clamping means for limiting the voltage across the DC bus (31,32) to a selected maximum level.

19. A power converter according to claim 18, wherein the clamping means includes means for returning sufficient energy to the resonant circuit during each cycle of oscillation to allow the resonant circuit to oscillate stably.

20. The power supply according to claim 19, when appendant to claim 15, wherein the clamping means includes the power supply capacitor (111) acting as a clamping capacitor connected in series with the controllable switching device connected in series with the resonant circuit, the clamping capacitor precharged to a selected voltage level.

21. The power converter of claim 20, wherein the clamping means includes a clamping capacitor (150) precharged to a selected voltage connected in series with a parallel connected diode (152) and controllable switching device (151), the clamping means connected across the inductor (142) of the resonant circuit, with the diode poled to be biased off by the charged capacitor until the voltage across the inductor exceeds the charge on the capacitor.

22. A power converter according to claim 21, wherein the clamping capacitor (150) is precharged to a voltage $(K-1)V_s$ whereby the DC bus voltage is substantially limited to a voltage $KV_s$, where $V_s$ is a selected desired operating voltage and K is a chosen constant which is less than 2 and greater than 1.

23. A power converter according to claim 20, wherein the clamping means includes a clamping capacitor (153) connected in series with the inductor (142) of the resonant circuit and in parallel with the capacitor (142) of the resonant circuit and a controllable switching deice connected in series with the resonant circuit, the clamping capacitor (153) being precharged to a selected voltage level.

24. A power converter according to claim 23, wherein the clamping capacitor (153) is precharged to a voltage $KV_s$ whereby the DC bus voltage is substantially limited to a voltage $V_s$, where $V_s$ is a selected desired operating voltage and K is a chosen constant which is less than 1.

25. A method of maintaining stable oscillations in a resonant circuit (60) composed of an inductor (62) receiving unidirectional power and a capacitor (63) connected to the inductor (62), characterised in that the resonant circuit is connected to an inverter having gate turn-off switching devices (70,71;72,73;74,75) such that the output voltage from the resonant circuit is provided to the inverter, and by the steps of:

(a) shunting the current from the inductor (62) around the capacitor (63) and then opening the shunt to allow the current from the inductor (62) to flow into the capacitor (63) and into the inverter, the capacitor (63) being shunted for a period of time sufficient to build up sufficient current in the inductor (62), such that when the shunt is removed, the voltage across the capacitor (63) will be driven to zero at the end of one resonant cycle; and

(b) switching the switching devices of the inverter on and off only at times of substantially zero voltage provided from the resonant circuit to the inverter.

26. The method of claim 25, wherein the shunt is applied to and removed from the capacitor (63) only at times of substantially zero voltage across the capacitor.

## Patentansprüche

1. Leistungsgleichrichter mit

a) einem Resonanzschaltkreis (20) mit einer Drossel (30) zum Empfang eines Gleichstromleistungseingangsignals, mit einem an die Drossel angeschlossenen Kondensator (29), und mit einer Gleichstromschiene (31, 32), welche die Ausgangsspannung vom Resonanzschaltkreis (20) liefert, gekennzeichnet durch

b) Einrichtungen (24, 27), welche eine stabile Oszillation des Resonanzschaltkreises an oder unterhalb seiner Resonanzfrequenz verursachen, und welche verursachen, daß die Spannung über die Gleichstromschiene (31, 32) bei einem mittleren Gleichstromniveau aufrechterhalten und mindestens einmal während jeder Schwingungsperiode des Resonanzkreises zu Null wird, und

c) einen Umformer (40), der zum Empfang der Spannung an der Gleichstromschiene angeschlossen ist und Schaltvorrichtungen besitzt, die nur dann geschaltet werden, wenn die Spannung an der Gleichstrom-

EP 0 292 512 B1

schiene (31, 32) im wesentlichen Null ist.

2. Leistungsgleichrichter nach Anspruch 1, dadurch gekennzeichnet, daß eine die Eingangsleistung bei einer ersten Frequenz empfangende Gleichrichtereinrichtung vorgesehen ist zum Gleichrichten des Eingangssignale und nur Abgabe der gleichgerichteten Leistung an den Resonanzschaltkreis.

3. Leistungsgleichrichter nach Anspruch 1 oder 2, dadurch gekennzeichnet, daß zur Lieferung von Gleichstromausgangsleistung an den Resonanzschaltkreis eine Leistungsquelle (21) vorgesehen ist.

4. Leistungsgleichrichter nach Anspruch 1, 2 oder 3, dadurch gekennzeichnet, daß die die Schwingung des Resonanzschaltkreises (60) verursachende Einrichtung eine steuerbare Schaltvorrichtung (64), die über den Kondensator (63) des Resonanzschaltkreises (60) angeschlossen ist, und eine Einrichtung zum Ein- und Ausschalten der Schaltvorrichtung (64) im wesentlichen an den Funkten von Null-Spannung am Kondensator (63) und zum Parallelschalten des Kondensators (63) während einer Zeit enthält, die ausreicht, eine Stromhöhe in die Drossel (62) zu liefern, die ausreicht, die Spannung im Kondensator (63) nach Null zu treiben, um stabile Oszillationen im Rezonanzschaltkreis aufrechtzuerhalten.

5. Leistungsgleichrichter nach Anspruch 1, 2 oder 3, dadurch gekennzeichnet, daß die eine Schwingung des Resonanzschaltkreises (60) verursachende Einrichtung eine Schaltvorrichtung (64) enthält, die über die Gleichstromschiene (65, 66) angeschlossen ist, und die zu Zeiten von Null-Spannung an der Gleichstromschiene (65, 66) geschaltet wird, um in der Drossel (62) einen Strom zu erzeugen, der ausreicht, die Spannung am Kondensator (63) während des Schwingungszyklus auf Null-Spannung zu treiben.

6. Leistungsgleichrichter nach Anspruch 1, 2 oder 3, dadurch gekennzeichnet, daß die eine Schwingung des Resonanzschaltkreises (60) verursachende Einrichtung eine Schaltvorrichtung (64) enthält, die über die Gleichstromschiene (65, 66) angeschlossen und die gesteuert ist zum Schalten zu Zeiten, zu welchen Null-Spannung über der Gleichstromschiene (65, 66) gegeben ist, um in der Drossel (62) ausreichend Strom zu entwickeln, um stabile Schwingungen im Resonanzschaltkreis (60) aufrechtzuerhalten, wobei die Spannung über dem Kondensator (63) dem Resonanzschaltkreises mindestens einmal während jeder Schwingungsperiode zu Null wird.

7. Leistungsgleichrichter nach Anspruch 1, 2 oder 3, dadurch gekennzeichnet, daß die eine Schwingung des Resonanzschaltkreises (20) verursachende Einrichtung vier steuerbare Schaltvorrichtungen (24 bis 27) enthält, die an die Gleichstromschiene (31, 32) in einer H-Brückenkonfiguration angeschlossen sind, wobei die Drossel (30) und der Kondensator (29) des Resonanzschaltkreises (20) über die Brücke angeschlossen sind.

8. Leistungsgleichrichter nach Anspruch 1, 2 oder 3, dadurch gekennzeichnet, daß die eine Schwingung des Resonanzschaltkreises (80) verursachende Einrichtung ein Paar Schaltvorrichtungen (87, 88; 89, 90; 91, 92) im Umformer enthält, die gesteuert sind zum Zusammenschalten zum Parallelschalten des Kondensators (84) zum Erzeugen eines Stromes in der Drossel (82), der ausreicht, um die Spannung im Kondensator (84) während des Schwingungszyklus nach Null zu treiben.

9. Leistungsgleichrichter nach Anspruch 1, 2 oder 3, dadurch gekennzeichnet daß die eine Schwingung des Resonanzschaltkreises verursachende Einrichtung in Reihe geschaltete Paare von Schaltvorrichtungen (87, 88; 89, 90; 91, 92) enthält, die über die Gleichstromschiene (85, 86) angeschlossen sind und die zu Zeiten von Null-Spannung an der Gleichstromschiene (85, 86) geschaltet werden, um in der Drossel zum Aufrechterhalten stabiler Schwingungen im Resonanzschaltkreis ausreichend Strom zu entwickeln, wobei die Spannung am Kondensator (84) des Resonanzschaltkreises während jeder Schwingungsperiode nach Null geht.

10. Leistungsgleichrichter nach Anspruch 1, 2 oder 3, dadurch gekennzeichnet, daß der Umformer in Reihe geschaltete Paare von Gatter-Ausschalt-Schaltvorrichtungen (87, 88; 89, 90; 91, 92) (=gate turn-off switching devices) enthält, die über die Gleichstromschiene (85, 86) angeschlossen sind, wobei jede Gatter-Ausschalt-Schaltvorrichtung nur zu Zeiten, zu welchen die Spannung an der Gleichstromschiene im wesentlichen Null ist, in der Weise aus- und eingeschaltet wird, daß die Spannungen zwischen den Paaren von Gatter-Ausschalt-Vorrichtungen zyklisch als eine Funktion der Zeit bei einer gewünschten Frequenz variieren, die im wesentlichen kleiner ist als die Schwingungsfrequenz des Resonanzschaltkreises.

11. Leistungsgleichrichter nach Anspruch 1, 2 oder 3, dadurch gekennzeichnet, daß der Umformer Paare von Gatter-Ausschalt-Schaltvorrichtungen (87, 88; 89, 90; 91,92) enthält, die über die Gleichstromschiene (85, 86) angeschlossen sind, wobei jede Gatter-Ausschalt-Vorrichtung nur zu Zeiten, zu welchen die Spannung an der Gleichstromschiene im wesentlichen Null ist, in der Weise aus- und eingeschaltet wird, daß die Spannungen zwischen Paaren von Gatter-Ausschalt-Vorrichtungen zyklisch als eine Funktion der Zeit bei einer gewünschten Frequenz variieren.

12. Leistungsgleichrichter nach einem der Ansprüche 8 bis 11, dadurch gekennzeichnet daß die eine Schwingung des Resonanzschaltkreises verursachende Einrichtung ausgewählte Paare von Gatter-Ausschalt-Vorrichtungen im Umformer zusammen einschaltet, um über den Kondensator des Resonanzschaltkreises einen Nebenschluß vorzusehen, um in der Drossel des Resonanzschaltkreises einen ausreichenden Strom zu entwickeln, um die Kondensatorspannung während des Schwingungszyklus nach Null zu treiben.

15

13. Leistungsgleichrichter nach Anspruch 1, 2 oder 3, dadurch gekennzeichnet, daß die Leistungsquelle Paare von Schaltvorrichtungen enthält, die in einer Brückenkonfiguration an eine Wechselstromleistungsquelle angeschlossen sind, und die Ausgänge besitzen, die zur Abgabe von Gleichstromleistung an den Resonanzschaltkreis angeschlossen sind, und daß die Schaltvorrichtungen in einer folge derart ein- und ausgeschaltet werden, daß an den Resonanzschaltkreis zum Aufrechterhalten der Erregung eine Mittlere Leistung Abgegeben wird.

14. Leistungsgleichrichter nach Anspruch 1, 2 oder 3, dadurch gekennzeichnet, daß die Leistungsquelle Wechselstromleistung bei einer ersten Frequenz empfängt, daß der Resonanzschaltkreis bei einer Zweiten Frequenz schwingt, die in wesentlichen höher ist als die erste Frequenz, und daß der Umformer Wechselstromausgangsleistung bei einer dritten Frequenz liefert, die im wesentlichen niedriger ist als die zweite Frequenz.

15. Resonanz-Gleichstromleistungsquelle mit

a) einem Resonanzschaltkreis (80), der eine Drossel (82) und einen Kondensator (84) besitzt und eine Gleichstrom-Ausgangsschiene (85, 86) enthält, die an den Resonanzschaltkreis angeschlossen ist, dadurch gekennzeichnet,

b) einen Gleichrichter mit Paaren von Schaltvorrichtungen (101, 102; 103, 104; 105, 106), die in einer Brückenkonfiguration angeschlossen sind zum Empfang von Wechselstromleistung von einem Wechselstromleistungssystem, und geschaltet zu werden zum Gleichrichten der Wechselstromleistung zu einer gleichgerichteten Leistung an einem Ausgang, und mit Drosseln (107, 108, 109), die zwischen den Wechselstromleistungssystem-Eingangsleitungen und dem gleichgerichteten Ausgang angeschlossen sind, wobei der Resonanzschaltkreis an den Ausgang der Brückengleichrichterschaltungsvorrichtungen angeschlossen ist und ein Leistungskondensator (111) in Reihe mit der Drossel (82) zusammengeschaltet ist und

c) eine Einrichtung (113) zur stabilen Oszillation des Resonanzschaltkreises an oder unter seiner Resonanzfrequenz derart, daß die Spannung über der Gleichstromausgangsschiene (85, 86) mindestens einmal während jedes Schwingungszyklus zu Null wird, und daß eine mittlere Spannung am Leistungskondensator (111) und an der Gleichstromschiene (85, 86) aufrechterhalten wird.

16. Leistungsquelle nach Anspruch 15, dadurch gekennzeichnet, daß die eine Schwingung des Resonanzschaltkreises verursachende Einrichtung eine Schaltvorrichtung (43), die über die Gleichstromschiene (85, 86) angeschlossen ist, und eine Einrichtung enthält, die zur Steuerung des Schaltvorgangs der Schaltvorrichtung zum Schalten zu Zeiten vorgesehen ist, zu welchen an der Gleichstromschiene (85, 86) die Spannung Null ist, um im Resonanzschaltkreis stabile Oszillationen aufrechtzuerhalten.

17. Leistungsquelle nach Anspruch 15, dadurch gekennzeichnet, daß die eine Schwingung des Resonanzschaltkreises verursachende Einrichtung Paare von Schaltvorrichtungen (87, 88; 99, 90; 91, 92) enthält, die über die Gleichstromschiene (85, 86) angeschlossen sind, und die zu Zeiten geschaltet werden, zu welchen die Spannung über der Gleichstromschiene Null ist, um im Resonanzschaltkreis stabile Oszillationen aufrechtzuerhalten.

18. Leistungsumformer nach einem der vorhergehenden Ansprüche, dadurch gekennzeichnet, daß Klemmeinrichtungen vorgesehen sind zum Begrenzen der Spannung über der Gleichstromschiene (85, 86) auf eine ausgewählte maximale Höhe.

19. Leistungsumformer nach Anspruch 18, dadurch gekennzeichnet, daß die Klemmeinrichtung eine Einrichtung enthält, die zur Rückgabe einer ausreichenden Energie an den Resonanzschaltkreis während jedes Schwingungszyklus vorgesehen ist, so daß der Resonanzschaltkreis stabil schwingt.

20. Leistungsquelle nach Anspruch 19, wenn dieser von Anspruch 15 abhängig ist, dadurch gekennzeichnet, daß die Klemmeinrichtung den Leistungskondensator (111) enthält, der als ein Klemmkondensator wirkt und in Reihe angeschlossen ist an die steuerbare Schaltvorrichtung, die in Serie geschaltet ist mit dem Resonanzschaltkreis, wobei der Klemmkondensator auf eine ausgewählte Spannungshöhe vorgeladen ist.

21. Leistungsumformer nach Anspruch 20, dadurch gekennzeichnet, daß die Klemmeinrichtung einen Klemmkondensator (150) enthält, der auf eine ausgewählte Spannung vorgeladen und in Reihe geschaltet ist mit einer parallel angeschlossenen Diode (152) und einer steuerbaren Schaltvorrichtung (151), wobei die Klemmeinrichtung über die Drossel (142) des Resonanzschaltkreises angeschlossen ist, und die Diode derart gepolt ist, daß sie durch den geladenen Kondensator ausgeschaltet bleibt, bis die Spannung über der Drossel die Ladung des Kondensators übersteigt.

22. Leistungesumformer nach Anspruch 21, dadurch gekennzeichnet, daß der Klemmkondensator (150) auf eine Spannung $(K-1)V_s$ vorgeladen ist, so daß die Gleichstromschienenspannung im wesentlichen begrenzt ist auf eine Spannung $KV_s$, wobei $V_s$ eine ausgewählte gewünschte Arbeitsspannung und K eine ausgewählte Konstante <2 und >1 ist.

23. Leistungsumformer nach Anspruch 20, dadurch gekennzeichnet, daß die Klemmeinrichtung einen Klemmkondensator (153) enthält, der mit der Drossel (142) des Resonanzschaltkreises in Reihe und mit dem Kondensator (142) des Resonanzschaltkreises parallelgeschaltet ist, und daß mit dem Resonanzschaltkreis eine Steuerbare Schaltvorrichtung in Serie geschaltet ist, wobei der Klemmkondensator (153) aus eine ausgewählte Spannungshöhe vorgeladen ist.

24. Leistungsumformer nach Anspruch 23, dadurch gekennzeichnet, daß der Klemmkondensator (153) auf eine Spannung KV$_s$ vorgeladen ist, so daß die Gleichstromschienenspannung im wesentlichen auf eine Spannung V$_s$ begrenzt ist, wobei V$_s$ eine ausgewählte gewünschte Arbeitsspannung und K eine gewählte Konstante ist, die kleiner als 1 ist.

25. Verfahren zum Aufrechterhalten stabiler Oszillationen in einem Resonanzschaltkreis (60) bestehend aus einer gleichgerichtete Leistung empfangenden Drossel (62) und einem an die Drossel (62) angeschlossenen Kondensator (63), dadurch gekennzeichnet, daß der Resonanzschaltkreis an einen Umformer angeschlossen ist, der Gatter-Ausschalt-Vorrichtungen (70, 71; 72, 73; 74, 75) besitzt, so daß die Ausgangsspannung von Resonanzschaltkreis zum Umformer geliefert wird, mit den Verfahrensschritten:

a) Parallelschalten des Stromes von der Drossel (62) um den Kondensator (63) und anschließendes Öffnen des parallelgeschalteten Nebenschlußzweiges, so daß der Strom von der Drossel (62) in den Kondensator (63) und in den Umformer fließt, der Kondensator (63) für eine Zeitspanne parallelgeschaltet wird, die ausreicht, um in der Drossel (62) einen ausreichenden Strom zu erzeugen, so daß die Spannung über dem Kondensator (63) am Ende eines Resonanzzyklus gegen Null getrieben wird, wenn der Nebenschlußzweig entfernt wird, und

b) Ein- und Ausschalten der Schaltvorrichtungen des Umformers nur zu Zeiten, wenn vom Resonanzschaltkreis an den Umformer im wesentlichen Null-Spannung geliefert wird.

26. Verfahren nach Anspruch 25, dadurch gekennzeichnet, daß der Nebenschlußzweig nur zu Zeiten an den Kondensator (63) angeschlossen und von ihm entfernt wird, wenn am Kondensator im wesentlichen Null-Spannung anliegt.

**Revendications**

1. Convertisseur de puissance comprenant :

(a) un circuit résonnant (20) comportant une bobine de self-induction (30) adaptée pour recevoir un courant continu d'entrée, un condensateur (29) relié à la bobine de self-induction, et des barres omnibus (31, 32) pour courant continu fournissant la tension de sortie du circuit résonnant (20), caractérisé par :

(b) des moyens (24, 27) pour faire osciller de façon stable le circuit résonnant à ou en-dessous de sa fréquence de résonance et pour maintenir la tension aux bornes des barres omnibus (31, 32) pour courant continu à un niveau de courant continu moyen et pour la faire passer à une valeur nulle au moins une fois pendant chaque cycle d'oscillation du circuit résonnant; et

(c) un onduleur (40) relié de manière à recevoir la tension présente sur les barres omnibus pour courant continu et comportant des dispositifs de commutation qui sont commutés uniquement lorsque la tension sur les barres omnibus (31, 32) pour courant continu est sensiblement nulle.

2. Convertisseur de puissance selon la revendication 1, comprenant, en outre, des moyens convertisseurs recevant un courant d'entrée à une première fréquence pour redresser ce courant d'entrée et fournir un courant redressé au circuit résonnant.

3. Convertisseur de puissance selon la revendication 1 ou 2, comprenant, en outre, des moyens (21) d'alimentation en courant pour fournir un courant continu de sortie au circuit résonnant.

4. Convertisseur de puissance selon la revendication 1, 2 ou 3, dans lequel les moyens servant à faire osciller le circuit résonnant (60) comprennent un dispositif de commutation commandable (64) relié aux bornes du condensateur (63) du circuit résonnant (60) et des moyens pour faire commuter le dispositif de commutation.(64) entre un état conducteur et un état non-conducteur sensiblement aux points de tension nulle du condensateur (63) et pour établir une dérivation sur le condensateur (63) pendant un temps suffisant pour établir dans la bobine de self-induction (62) un niveau de courant qui est suffisant pour annuler la tension dans le condensateur (63) de manière à maintenir des oscillations stables dans le circuit résonnant (60).

5. Convertisseur de puissance selon la revendication 1, 2 ou 3, dans lequel les moyens pour faire osciller le circuit résonnant (60) comprennent un dispositif de commutation (64) monté entre les barres omnibus (65, 66) pour courant continu et commuté aux moments de l'annulation de la tension sur les barres omnibus (65, 66) pour courant continu de manière à créer dans la bobine de self-induction (62) un courant suffisant pour permettre au condensateur (63) d'être amené à une tension nulle pendant le cycle d'oscillation.

6. Convertisseur de puissance selon la revendication 1, 2 ou 3, dans lequel les moyens pour faire osciller le circuit résonnant (60) comprennent un dispositif de commutation (64) monté entre les barres omnibus (65, 66) pour courant continu et commandé de manière à commuter aux moments de l'annulation de la tension entre les barres omnibus (65, 66) pour courant continu afin de créer un courant suffisant dans la bobine de self-induction (62) pour maintenir des oscillations stables dans le circuit résonnant (60), la tension aux bornes du condensateur (63) du circuit résonnant passant par une valeur nulle au moins une fois pendant chaque cycle d'oscillation.

7. Convertisseur de puissance selon la revendication 1, 2 ou 3, dans lequel les moyens pour faire osciller le circuit résonnant (20) comprennent quatre dispositifs de commutation commandables (24 - 27) reliés aux barres omnibus (31, 32) pour courant continu dans un montage en pont H, la bobine de self-induction (30) et le condensateur (29) du circuit résonnant (20) étant reliés aux bornes du pont.

8. Convertisseur de puissance selon la revendication 1, 2 ou 3, dans lequel les moyens pour faire osciller le circuit résonnant (80) comprennent, dans l'onduleur, des paires de dispositifs de commutation (87, 88 ; 89, 90 ; 91, 92) qui sont commandés de manière à commuter ensemble pour établir une dérivation sur le condensateur (84) afin de créer dans la bobine de self-induction (82) un courant suffisant pour permettre à la tension dans le condensateur (84) d'être annulée pendant le cycle d'oscillation.

9. Convertisseur de puissance selon la revendication 1, 2 ou 3, dans lequel les moyens pour faire osciller le circuit résonnant comprennent des paires, reliées en série, de dispositifs de commutation (87, 88 ; 89, 90 ; 91, 92) reliés aux bornes de la barre omnibus (85, 86) pour courant continu qui sont commutés au moment de l'annulation de la tension sur les barres omnibus (85, 86) pour courant continu de manière à créer dans la bobine de self-induction un courant suffisant pour maintenir des oscillations stables dans le circuit résonnant, la tension aux bornes du condensateur (84) du circuit résonnant passant par une valeur nulle pendant chaque cycle d'oscillation.

10. Convertisseur de puissance selon la revendication 1, 2 ou 3, dans lequel l'onduleur comprend des paires, reliées en série, de dispositifs de commutation (87, 88 ; 89, 90 ; 91, 92) à gâchette commandée montées entre les barres omnibus (85, 86) pour courant continu, chaque dispositif à gâchette commandée passant dans un état conducteur et dans un état non-conducteur uniquement aux moments où la tension sur les barres omnibus pour courant continu prend sensiblement une valeur nulle, d'une manière telle que les tensions entre les paires de dispositifs à gâchette commandée varient de façon cyclique en fonction du temps à une fréquence désirée qui est sensiblement inférieure à la fréquence d'oscillation du circuit résonnant.

11. Convertisseur de puissance selon la revendication 1, 2 ou 3, dans lequel l'onduleur comprend des paires de dispositifs de commutation (87, 88 ; 89, 90 ; 91, 92) à gâchette commandée montées entre les barres omnibus (85, 86) pour courant continu, chaque dispositif à gâchette commandée prenant un état conducteur et un état non-conducteur uniquement aux moments où la tension sur les barres omnibus pour courant continu prend une valeur sensiblement nulle d'une manière telle que les tensions entre les paires de dispositifs à gâchette commandée varient de façon cyclique en fonction du temps à une fréquence désirée.

12. Convertisseur de puissance selon l'une quelconque des revendication 8 à 11, dans lequel les moyens pour faire osciller le circuit résonnant font prendre un état conducteur à des paires sélectionnées de dispositifs à gâchette commandée dans l'onduleur afin d'établir une dérivation aux bornes du condensateur du circuit résonnant pour créer dans la bobine de self-induction du circuit résonnant un courant suffisant pour permettre à la tension du condensateur d'être annulée pendant le cycle d'oscillation.

13. Convertisseur de puissance selon la revendication 1, 2 ou 3, dans lequel les moyens d'alimentation en courant comprennent des paires de dispositifs de commutation reliés sous forme d'un pont à une source de courant alternatif et comportant des sorties reliées de manière à fournir un courant continu au circuit résonnant, et dans lequel les dispositifs de commutation sont commutés dans un état conducteur et dans un état non-conducteur successivement de telle sorte qu'une puissance moyenne soit fournie au circuit résonnant pour maintenir l'excitation.

14. Convertisseur de puissance selon la revendication 1, 2 ou 3, dans lequel : les moyens d'alimentation en courant reçoivent un courant alternatif à une première fréquence, le circuit résonnant oscille à une seconde fréquence notablement plus élevée que la première fréquence, et l'onduleur fournit un courant de sortie alternatif à une troisième fréquence qui est notablement plus faible que la seconde fréquence.

15. Alimentation en courant continu du type à résonance comprenant :

(a) un circuit résonnant (80) comportant une bobine de self-induction (82) et un condensateur (84) et comprenant des barres omnibus (85, 86) de sortie de courant continu reliée au circuit résonnant (20), caractérisé par :

(b) un convertisseur comprenant des paires de dispositifs de commutation (101, 102 ; 103, 104 ; 105, 106) reliés sous forme d'un pont de manière à recevoir le courant alternatif en provenance d'une source de courant alternatif et à être commuté de manière à redresser le courant alternatif en un courant continu à une sortie et comprenant des moyens de self-induction (107, 108, 109) montés entre les lignes d'entrée de'la source de courant alternatif et sa sortie de courant continu, et dans lequel le circuit résonnant précité est relié à la sortie des dispositifs de commutation du convertisseur en pont et un condensateur (111) d'ali-

EP 0 292 512 B1

mentation en courant relié en série avec la bobine de self-induction (82) ;

(c) des moyens (113) pour faire osciller le circuit résonnant de façon stable à ou en-dessous de sa fréquence de résonance de telle sorte que la tension aux bornes des barres omnibus (85, 86) de sortie de courant continu passe par une valeur nulle au moins une fois pendant chaque cycle d'oscillation et de telle sorte qu'une tension moyenne soit maintenue aux bornes du condensateur (111) d'alimentation en courant et entre les barres omnibus (85, 86).

16. Alimentation en courant électrique selon la revendication 15, dans laquelle les moyens pour faire osciller le circuit résonnant comprennent un dispositif de commutation (43) monté entre les barres omnibus (85, 86) pour courant continu et des moyens pour commander la commutation des dispositifs de commutation pour qu'ils commutent aux moments de l'annulation de la tension entre les barres omnibus (85, 86) pour courant continu afin de maintenir des oscillations stables dans le circuit résonnant.

17. Alimentation en courant électrique selon la revendication 15, dans laquelle les moyens pour faire osciller le circuit résonnant comprennent des paires de dispositifs de commutation (87, 88 ; 89, 90 ; 91, 92) montées entre les barres omnibus (85, 86) pour courant continu et commutées aux moments de l'annulation de la tension entre les barres omnibus pour courant continu de manière à maintenir des oscillations stables dans le circuit résonnant.

18. Convertisseur de puissance selon l'une quelconque des revendications précédentes, comprenant, en outre, un moyen de blocage pour limiter la tension entre les barres omnibus (31, 32) pour courant continu à un niveau maximal sélectionné.

19. Convertisseur de puissance selon la revendication 18, dans lequel le moyen de blocage comprend un moyen pour envoyer une énergie suffisante au circuit résonnant pendant chaque cycle d'oscillation de manière à permettre au circuit résonnant d'osciller de façon stable.

20. Alimentation de courant électrique selon la revendication 19, lorsqu'elle est rattachée à la revendication 15, dans laquelle le moyen de blocage comprend le condensateur (111) d'alimentation en courant agissant comme un condensateur de blocage monté en série avec le dispositif de commutation commandable monté en série avec le circuit résonnant, le condensateur de blocage étant chargé préalablement à un niveau de tension sélectionné.

21. Convertisseur de puissance selon la revendication 20, dans lequel le moyen de blocage comprend un condensateur de blocage (150) chargé préalablement à une tension sélectionnée et monté en série avec une diode (152) montée en parallèle et un dispositif de commutation commandable (151), le moyen de blocage monté aux bornes de la bobine de self-induction (142) du circuit résonnant, la diode étant montée de manière à être bloquée par le condensateur chargé, jusqu'à ce que la tension aux bornes de la bobine de self-induction dépasse la charge du condensateur.

22. Convertisseur de puissance selon la revendication 21, dans lequel le condensateur de blocage (150) est chargé préalablement à une tension $(K-1)V_s$ grâce à laquelle la tension sur les barres omnibus pour courant continu est sensiblement limitée à une tension $KV_s$, où $V_s$ est une tension de fonctionnement désirée sélectionnée et K est une constante choisie qui est inférieure à 2 et supérieur à 1.

23. Convertisseur de puissance selon la revendication 20, dans lequel le moyen de blocage comprend un condensateur de blocage (153) monté en série avec la bobine de self-induction (142) du circuit résonnant et en parallèle avec le condensateur (143) du circuit résonnant et un dispositif de commutation commandable monté en série avec le circuit résonnant, le condensateur de blocage (153) étant chargé préalablement à un niveau de tension sélectionné.

24. Convertisseur de puissance selon la revendication 23, dans lequel le condensateur de blocage (153) est chargé préalablement à une tension $KV_s$ grâce à laquelle la tension sur les barres omnibus pour courant continu se trouve sensiblement limitée à une tension $V_s$ où $V_s$ est une tension de fonctionnement désirée sélectionnée et K est une constante choisie qui est inférieure à 1.

25. Procédé pour maintenir les oscillations stables dans un circuit résonnant (60) composé d'une bobine de self-induction (62) recevant un courant continu et d'un condensateur (63) relié à la bobine de self-induction (62), caractérisé par le fait que l'on relie le circuit résonnant à un onduleur comportant des dispositifs de commutation (70, 71 ; 72, 73 ; 74, 75) à gâchette commandée de telle sorte que la tension de sortie du circuit résonnant soit fournie à l'onduleur, et par les étapes consistant :

(a) à détourner le courant en provenance de la bobine de self-induction (62) autour du condensateur (63) et à ouvrir ensuite la dérivation pour permettre au courant en provenance de la bobine de self-induction (62) de pénétrer dans le condensateur (63) et dans l'onduleur, le condensateur (63) étant connecté à une dérivation pendant une période de temps suffisante pour accumuler un courant suffisant dans la bobine de self-induction (62) de telle sorte que, lorsque la dérivation est supprimée, la tension aux bornes du condensateur (63) se trouve annulée à la fin du cycle de résonnance ; et

b) à commuter les dispositifs de commutation de l'onduleur entre un état conducteur et un état non-con-

19

ducteur uniquement aux moments où la tension fournie par le circuit résonnant à l'onduleur prend une valeur sensiblement nulle.

26. Procédé selon la revendication 25, dans lequel on applique la dérivation au condensateur (63) et on l'en supprime uniquement aux moments où la tension est sensiblement nulle aux bornes du condensateur.

FIG. I

FIG. 2

FIG. 3

EP 0 292 512 B1

$V_O(t) = V_S(1 - \cos\omega t)$

FIG. 4

FIG. 5

FIG. 6

FIG. 7

22

FIG. 8

FIG. 11

23

FIG. 9

FIG. 10

FIG. 12

FIG. 13

FIG. 14

FIG. 15

FIG. 16

FIG. 17

FIG. 18

FIG. 19

$I_T = 0$    $C_2 = 100 \mu F$    $Vmax = 1.4 V_S$    $R = 0.01$

FIG. 20

FIG. 21

FIG. 22

FIG. 23